(19)

**Europäisches Patentamt**
**European Patent Office**
**Office européen des brevets**

(11) **EP 4 645 197 A1**

(12) **EUROPEAN PATENT APPLICATION**
published in accordance with Art. 153(4) EPC

(43) Date of publication:
05.11.2025 Bulletin 2025/45

(21) Application number: 23910189.2

(22) Date of filing: 14.12.2023

(51) International Patent Classification (IPC):
*G06Q 40/04* (2012.01)  *G06F 21/64* (2013.01)
*G06F 21/62* (2013.01)  *G06Q 20/38* (2012.01)

(52) Cooperative Patent Classification (CPC):
**G06F 21/62; G06F 21/64; G06Q 20/38; G06Q 40/04**

(86) International application number:
**PCT/CN2023/138883**

(87) International publication number:
**WO 2024/140259 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.12.2022 CN 202211701471
28.12.2022 CN 202211702772

(71) Applicant: **Digital Currency Institute, The People's Bank of China**
**Beijing 100071 (CN)**

(72) Inventors:
• **MU, Changchun**
**Beijing 100071 (CN)**

• **DI, Gang**
**Beijing 100071 (CN)**
• **LYU, Yuan**
**Beijing 100071 (CN)**
• **QIAN, Youcai**
**Beijing 100071 (CN)**
• **GAO, Yang**
**Beijing 100071 (CN)**
• **HE, Mengwei**
**Beijing 100071 (CN)**
• **ZHAO, Ruiqi**
**Beijing 100071 (CN)**
• **LV, Pumeng**
**Beijing 100071 (CN)**

(74) Representative: **Epping - Hermann - Fischer**
**Patentanwaltsgesellschaft mbH**
**Schloßschmidstraße 5**
**80639 München (DE)**

(54) **BLOCKCHAIN-BASED TRANSACTION SUPERVISION METHOD, SYSTEM AND APPARATUS, AND ELECTRONIC DEVICE**

(57) A blockchain-based transaction supervision method, comprising: a payer client node constructing first transaction ciphertext information on the basis of a random symmetric key, wherein the first transaction ciphertext information comprises an encrypted payment address, an encrypted transaction amount, an encrypted collection address, and first transaction supervision ciphertext information, and the first transaction supervision ciphertext information comprises encrypted supervision information and one or more encrypted symmetric keys; sending the first transaction ciphertext information and a zero-knowledge proof to a blockchain; a blockchain verification node storing the first transaction ciphertext information to the blockchain when the zero-knowledge proof is established; and an associated supervisor node acquiring the first transaction ciphertext information from the blockchain, performing decryption by using a supervision private key to obtain the random symmetric key, and performing decryption by using the random symmetric key, to obtain transaction plaintext information for supervision and verification.

EP 4 645 197 A1

a payer client node obtains transaction plaintext of a transaction — 201

the payer client node receives an encrypted payee address and a first amount encryption parameter sent by a payee client node — 202

the payer client node generates a random symmetric key, and constructs the first transaction ciphertext based on the random symmetric key — 203

the payer client node sends the first transaction ciphertext and a zero-knowledge proof to a blockchain — 204

the blockchain verification node stores the first transaction ciphertext onto the blockchain in a case that the zero-knowledge proof is valid, and updates a current account balance at the encrypted payer address and a current account balance at the encrypted payee address based on the first transaction ciphertext — 205

each of one or more associated supervision nodes obtains the first transaction ciphertext from the blockchain, performs decryption based on a supervision private key to obtain the random symmetric key, and performs decryption based on the random symmetric key to obtain the transaction plaintext for supervision and verification — 206

**FIG. 2**

## Description

The present application claims the priority to Chinese Patent Application No. 202211701471.6, filed on December 28, 2022, and the priority to Chinese Patent Application No. 202211702772.0, filed on December 28, 2022, which are incorporated herein by reference in their entirety.

## FIELD

The present disclosure relates to the technical field of blockchains, and in particular to a transaction supervision method, system and apparatus based on a blockchain, and an electronic device.

## BACKGROUND

The blockchain is a chain-like storage structure composed of multiple blocks. Each of the blocks stores a certain amount of information. The multiple blocks are connected in a chronological order of their generation to form a chain. Transaction information is recorded on the blocks in a ciphertext form, including a payer of a transaction, a payee of the transaction, a type of digital currency, a transaction amount, and a supervision party. The supervision party includes a supervision party supervising the payee, a supervision party supervising the payer, and a supervision party supervising the digital currency, responsible for verifying the compliance and legality of the transaction information.

During a process of supervising the transaction information, the supervision party should pay attention to the privacy of the transaction information. The transaction information should not be disclosed to other users on the blockchain who are not involved in the transaction information, and should not be disclosed to supervision parties unrelated to the transaction information.

## SUMMARY

In a first aspect, a transaction supervision method based on a blockchain is provided according to some embodiments of the present disclosure. The method includes:

by a payer client node, obtaining transaction plaintext of a transaction, where the transaction plaintext includes payee identity information, a transaction amount, and payer identity information;

receiving, by the payer client node, an encrypted payee address and a first amount encryption parameter sent by a payee client node;

generating, by the payer client node, a random symmetric key, and constructing, by the payer client node, first transaction ciphertext based on the random symmetric key, where the first transaction ciphertext includes an encrypted payer address, an encrypted payment amount, the encrypted payee address, and first transaction-supervision ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by encrypting the random symmetric key respectively based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount;

sending, by the payer client node, the first transaction ciphertext and a zero-knowledge proof to the blockchain, where the zero-knowledge proof is a proof for verifying whether the first transaction ciphertext is correct and complete;

storing, by a blockchain verification node, the first transaction ciphertext onto the blockchain in a case that the zero-knowledge proof is valid, and updating, by the blockchain verification node, a current account balance at the encrypted payer address and a current account balance at the encrypted payee address based on the first transaction ciphertext; and

by each of the one or more associated supervision nodes, obtaining the first transaction ciphertext from the blockchain, performing decryption based on a supervision private key to obtain the random symmetric key, and performing decryption based on the random symmetric key to obtain the transaction plaintext for supervision and verification.

In some embodiments, the one or more supervision public keys respectively corresponding to the one or more associated supervision nodes are stored in a know your customer (KYC) contract, and an element of a vector matrix in the KYC contract includes a user-identity vector, a supervision-identity vector, and a public-key vector, where the user-identity vector stores the payee identity information and the payer identity information, the supervision-identity vector stores identity information of the one or more associated supervision nodes, and the public-key vector stores a payee public key, a payer public key, and the one or more supervision public keys.

In some embodiments, any one of the one or more associated supervision nodes has an authority to supervise at least one of the following supervised objects related to the transaction: a payer client, a payee client, and a type of digital currency to which the transaction amount belongs.

In some embodiments, after performing decryption, by each of the one or more associated supervision nodes, based on the random symmetric key to obtain the transaction plaintext for supervision and verification, the transaction supervision method based on a blockchain further includes:

signing, by each of the one or more associated supervision nodes, the first transaction ciphertext based on the supervision private key to obtain signed ciphertext in a case that the transaction plaintext is correct and complete; and

sending, by each of the one or more associated supervision nodes, the signed ciphertext to the payer client node.

In some embodiments, the first transaction ciphertext further includes an expected account balance, the expected account balance being a remaining amount after the transaction amount is paid from the encrypted payer address.

In some embodiments, the zero-knowledge proof is used for performing at least one of the following:

verifying, based on the first amount encryption parameter, the second amount encryption parameter, and a Pedersen commitment, whether the transaction amount is greater than or equal to 0 and whether the current account balance at the encrypted payer address is greater than or equal to the transaction amount; or

verifying, based on the one or more supervision public keys and the first transaction-supervision ciphertext, whether the first transaction ciphertext is correct.

In some embodiments, the encrypted payee address is obtained by encrypting a payee address based on an asymmetric key-pseudonym algorithm; and the encrypted payer address is obtained by encrypting a payer address based on the asymmetric key-pseudonym algorithm.

In a second aspect, a transaction supervision method based on a blockchain applied to a payer client node is provided according to some embodiments of the present disclosure. The method includes:

obtaining transaction plaintext of a transaction, where the transaction plaintext includes payee identity information, a transaction amount, and payer identity information;

receiving an encrypted payee address and a first amount encryption parameter sent by a payee client node;

generating a random symmetric key, and constructing first transaction ciphertext based on the random symmetric key, where the first transaction ciphertext includes an encrypted payer address, an encrypted payment amount, the encrypted payee address, and first transaction supervision-ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by respectively encrypting the random symmetric key respectively based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount; and

sending the first transaction ciphertext and a zero-knowledge proof to the blockchain, where the zero-knowledge proof is a proof for verifying whether the first transaction-ciphertext is correct and complete.

In a third aspect, a transaction supervision method based on a blockchain applied to each of one or more associated supervision nodes is provided according to some embodiments of the present disclosure. The method includes:

obtaining first transaction ciphertext from the blockchain;

performing decryption based on a supervision private key to obtain a random symmetric key; and

performing decryption based on the random symmetric key to obtain transaction plaintext for supervision and verification, where
the first transaction ciphertext includes an encrypted payer address, an encrypted payment amount, an encrypted payee address, and first transaction supervision-ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by encrypting the random symmetric key based on one or more supervision public keys respectively corresponding to the one or more associated supervision nodes involved in a transaction, and

the encrypted payment amount is obtained by encrypting a transaction amount based on a first amount encryption parameter and a second amount encryption parameter, the first amount encryption parameter being a parameter used by a payee client node to encrypt the transaction amount, and the second amount encryption parameter being a parameter used by a payer client node to encrypt the transaction

amount; and

the transaction plaintext includes payee identity information, the transaction amount, and payer identity information.

In a fourth aspect, a transaction supervision method based on a blockchain is provided according to some embodiments of the present disclosure. The method includes:

by a payer client node, obtaining transaction plaintext of a transaction, and constructing second transaction ciphertext based on the transaction plaintext, where the transaction involves one or more associated supervision nodes;

by the payer client node, generating reporting information based on a know your customer (KYC) contract and the second transaction ciphertext, and encrypting the reporting information respectively based on one or more supervision public keys respectively corresponding to the one or more associated supervision nodes in the KYC contract, to obtain one or more pieces of second transaction-supervision ciphertext;

sending, by the payer client node, the second transaction ciphertext, the one or more pieces of second transaction-supervision ciphertext, and a zero-knowledge proof to the blockchain, where the zero-knowledge proof is a proof for verifying whether the reporting information is correct and complete;

storing, by a blockchain verification node, the second transaction ciphertext and the one or more pieces of second transaction-supervision ciphertext onto the blockchain in a case that the zero-knowledge proof is valid based on the second transaction ciphertext, the KYC contract, and the one or more pieces of second transaction-supervision ciphertext; and

obtaining, by each of the one of the one or more associated supervision nodes, a corresponding pieces of second transaction-supervision ciphertext from the blockchain, and decrypting the corresponding pieces of second transaction-supervision ciphertext based on a supervision private key, to obtain and supervise the reporting information.

In some embodiments, the transaction plaintext includes payee identity information, a transaction amount, and payer identity information, and the second transaction ciphertext includes an encrypted payer address, a payee-encrypted transaction amount, an encrypted payee address, and a payer-encrypted transaction amount.

In some embodiments, an element of a vector matrix in the KYC contract includes a user-identity vector, a supervision-identity vector, and a public-key vector, where the user-identity vector stores the payee identity information and the payer identity information; the supervision-identity vector stores identity information of the one or more associated supervision nodes; and the public-key vector stores a payee public key, a payer public key, and the one or more supervision public keys.

In some embodiments, the generating, by the payer client node, reporting information based on a KYC contract and the second transaction ciphertext includes:

signing, by the payer client node, the encrypted payer address based on a payer private key to obtain a signed payer address s;

obtaining, by the payer client node, a signed payee address corresponding to the encrypted payee address, where the signed payee address is obtained by signing the encrypted payee address based on a payee private key; and

merging, by the payer client node, payer location information, payee location information, digital-currency contract-address location information, the signed payer address, the signed payee address, a first amount encryption parameter, and the transaction amount, to generate the reporting information, where

the payer location information indicates location information of the payer public key corresponding to the payer client node in the KYC contract;

the payee location information indicates location information of the payee public key corresponding to a payee client node in the KYC contract, the payee client node being a client node corresponding to a payee of the transaction;

the digital-currency contract-address location information indicates location information of a digital-currency management node corresponding to a type of digital currency to which the transaction amount belongs in the KYC contract; and

the first amount encryption parameter is a parameter used to encrypt the transaction amount to obtain the payer-encrypted transaction amount.

In some embodiments, the one or more supervision public keys include a first supervision public key, a second supervision public key, and a third supervision public key, where an associated supervision node, corresponding to the first supervision public key, has an authority to supervise a payer client of supervised objects related to the transaction; an associated supervision node, corresponding to the second supervision public key, has an authority to supervise a payee client of the supervised objects related to the transaction; and an associated supervision node, corresponding to the third supervision public key, has an authority to supervise the type of digital currency, to which the transaction amount belongs, of the supervised objects related to the transaction. The encrypting, by the payer client node, the reporting information respectively based on one or more supervision public keys respectively corresponding to the one or more associated supervision nodes in the KYC contract to obtain one or more pieces of second transaction-supervision ciphertext includes: encrypting, by the payer client node, the reporting information respectively based on the first supervision public key, the second supervision public key, and the third supervision public key, to obtain the one or more pieces of second transaction-supervision ciphertext, where

the first supervision public key is a supervision public key corresponding to the payer location information in the KYC contract;

the second supervision public key is a supervision public key corresponding to the payee location information in the KYC contract; and

the third supervision public key is a supervision public key corresponding to the digital-currency contract-address location information in the KYC contract.

In some embodiments, the zero-knowledge proof is used for performing at least one of the following:

verifying, based on the first amount encryption parameter, the transaction amount, and a Pedersen commitment, whether the transaction amount in the reporting information is greater than or equal to 0 and whether an account balance at a payer address is greater than or equal to the transaction amount;

verifying, based on the payer public key and the signed payer address, whether the payer location information is correct;

verifying, based on the payee public key and the signed payee address, whether the payee location information is correct; or

verifying, based on the first supervision public key, the second supervision public key, the third supervision public key, and the one or more pieces of second transaction-supervision ciphertext, whether the one or more pieces of second transaction-supervision ciphertext correspond to same reporting information and whether each of the one or more pieces of second transaction-supervision ciphertext is correct.

In some embodiments, the encrypted payee address is obtained by encrypting a payee address based on an asymmetric key-pseudonym algorithm, and the encrypted payer address is obtained by encrypting the payer address based on the asymmetric key-pseudonym algorithm.

In some embodiments, an encrypted payment amount is obtained by encrypting the transaction amount based on the Pedersen commitment using the first amount encryption parameter as a confusion factor; and an encrypted payee amount is obtained by encrypting the transaction amount based on the Pedersen commitment using a second amount encryption parameter as a confusion factor.

In a fifth aspect, a transaction supervision method based on a blockchain applied to a payer client node is provided according to some embodiments of the present disclosure. The method includes:

by the payer client node, obtaining transaction plaintext of a transaction, and constructing second transaction ciphertext based on the transaction plaintext, where the transaction involves one or more associated supervision nodes;

generating reporting information based on a know your customer (KYC) contract and the second transaction ciphertext, and encrypting the reporting information respectively based on one or more supervision public keys respectively corresponding to the one or more associated supervision nodes in the KYC contract, to obtain one or more pieces of second transaction-supervision ciphertext; and

sending the second transaction ciphertext, the one or more pieces of second transaction-supervision ciphertext, and a zero-knowledge proof to the blockchain, where the zero-knowledge proof is a proof for verifying whether the reporting information is correct and complete, such that each of the one or more pieces of second transaction-supervision ciphertext is decrypted and supervised by a corresponding associated supervision node in a case that the zero-knowledge proof is valid.

In a sixth aspect, a transaction supervision method based on a blockchain applied to each of one or more associated supervision nodes is provided according to some embodiments of the present disclosure. The method includes:

obtaining a piece of second transaction-supervision ciphertext of one or more pieces of second transaction-supervision ciphertext from the blockchain, where
the one or more pieces of second transaction-supervision ciphertext are obtained by a payer client node through encrypting reporting information respectively based on one or more supervision public keys respectively corresponding to the one or more associated supervision nodes in a know your customer (KYC) contract, the reporting information being generated based on the KYC contract and second transaction ciphertext, the second transaction ciphertext being constructed based on transaction plaintext of a transaction, and the transaction involving the one or more associated supervision nodes; and

decrypting the piece of second transaction-supervision ciphertext based on a supervision private key, to obtain and supervise the reporting information n.

In a seventh aspect, a transaction supervision system based on a blockchain is provided according to some embodiments of the present disclosure. The system includes a payer client node, a blockchain verification node, and one or more associated supervision nodes.

The payer client node is configured to:

obtain transaction plaintext of a transaction, where the transaction plaintext includes payee identity information, a transaction amount, and payer identity information;

receive an encrypted payee address and a first amount encryption parameter sent by a payee client node;

generate a random symmetric key, and construct first transaction ciphertext based on the random symmetric key, where the first transaction ciphertext includes an encrypted payer address, an encrypted payment amount, the encrypted payee address, and first transaction-supervision ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by encrypting the random symmetric key respectively based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount; and

send the first transaction ciphertext and a zero-knowledge proof to the blockchain, where the zero-knowledge proof is a proof for verifying whether the first transaction-ciphertext is correct and complete.

The blockchain verification node is configured to store the first transaction-ciphertext onto the blockchain in a case that the zero-knowledge proof is valid, and update a current account balance at the encrypted payer address and a current account balance at the encrypted payee address based on the first transaction-ciphertext.

Each of the one or more associated supervision nodes are configured to obtain the first transaction ciphertext from the blockchain, perform decryption based on a supervision private key to obtain the random symmetric key, and perform decryption based on the random symmetric key to obtain the transaction plaintext for supervision and verification

In an eighth aspect, a transaction supervision apparatus based on a blockchain applied to a payer client node is provided according to some embodiments of the present disclosure. The apparatus includes an obtaining unit, a receiving unit, a processing unit, and a sending unit.

The obtaining unit is configured to obtain transaction plaintext of a transaction, where the transaction plaintext includes payee identity information, a transaction amount, and payer identity information.

The receiving unit is configured to receive an encrypted payee address and a first amount encryption parameter sent by a payee client node.

The processing unit is configured to generate a random symmetric key, and construct first transaction ciphertext based on the random symmetric key, where the first transaction ciphertext includes an encrypted payer address, an encrypted payment amount, the encrypted payee address, and first transaction supervision-ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by encrypting the random symmetric key based on one or more supervision public keys respectively corresponding to the one or more associated supervision nodes involved in a transaction, and

the encrypted payment amount is obtained by encrypting a transaction amount based on a first amount encryption parameter and a second amount encryption parameter, the first amount encryption parameter being a parameter used by a payee client node to encrypt the transaction amount, and the second amount encryption parameter being a parameter used by a payer client node to encrypt the transaction amount.

The sending unit is configured to the first transaction ciphertext and a zero-knowledge proof to the blockchain, where the zero-knowledge proof is a proof for verifying whether the first transaction-ciphertext is correct and complete.

In a ninth aspect, a transaction supervision apparatus based on a blockchain applied to each of one or more associated supervision nodes is provided according to some embodiments of the present disclosure. The apparatus includes an obtaining unit, a decrypting unit, and a supervising unit.

The obtaining unit is configured to obtain first transaction ciphertext from the blockchain.

The decrypting unit is configured to perform decryption based on a supervision private key to obtain a random symmetric key.

The supervising unit is configured to perform decryption based on the random symmetric key to obtain transaction plaintext for supervision and verification.

The first transaction ciphertext includes an encrypted payer address, an encrypted payment amount, an encrypted payee address, and first transaction supervision-ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by encrypting the random symmetric key based on one or more supervision public keys respectively corresponding to the one or more associated supervision nodes involved in a transaction, and

the encrypted payment amount is obtained by encrypting a transaction amount based on a first amount encryption parameter and a second amount encryption parameter, the first amount encryption parameter being a parameter used by a payee client node to encrypt the transaction amount, and the second amount encryption parameter being a parameter used by a payer client node to encrypt the transaction amount.

The transaction plaintext includes payee identity information, the transaction amount, and payer identity information.

In a tenth aspect, a transaction supervision system based on a blockchain is provided according to some embodiments of the present disclosure. The system includes a payer client node, a blockchain verification node, and one or more associated supervision nodes.

The payer client node is configured to:

obtain transaction plaintext of a transaction, and constructing second transaction ciphertext based on the transaction plaintext, where the transaction involves one or more associated supervision nodes;

generate reporting information based on a know your customer (KYC) contract and the second transaction ciphertext, and encrypt the reporting information respectively based on one or more supervision public keys respectively corresponding to the one or more associated supervision nodes in the KYC contract, to obtain one or more pieces of second transaction-supervision ciphertext; and

send the second transaction ciphertext, the one or more pieces of second transaction-supervision ciphertext, and a zero-knowledge proof to the blockchain, where the zero-knowledge proof is a proof for verifying whether the reporting information is correct and complete.

The blockchain verification node is configured to:
store the second transaction ciphertext and the one or more pieces of second transaction-supervision ciphertext onto the blockchain in a case that the zero-knowledge proof is valid based on the second transaction ciphertext, the KYC contract, and the one or more pieces of second transaction-supervision ciphertext.

Each of the one of the one or more associated supervision nodes is configured to:
obtain a corresponding pieces of second transaction-supervision ciphertext from the blockchain, and decrypt the corresponding pieces of second transaction-supervision ciphertext based on a supervision private key, to obtain and supervise the reporting information.

In an eleventh aspect, a transaction supervision apparatus based on a blockchain applied to a payer client node is provided according to some embodiments of the present disclosure. The apparatus includes a constructing unit, an obtaining unit, and a sending unit.

The constructing unit is configured to obtain transaction plaintext of a transaction, and construct second transaction ciphertext based on the transaction plaintext, where the transaction involves one or more associated supervision nodes.

The obtaining unit is configured to generate reporting information based on a know your customer (KYC) contract and the second transaction ciphertext, and encrypt the reporting information respectively based on one or more supervision public keys respectively corresponding to the one or more associated supervision nodes in the KYC contract, to obtain one or more pieces of second transaction-supervision ciphertext.

The sending unit is configured to send the second transaction ciphertext, the one or more pieces of second transaction-supervision ciphertext, and a zero-knowledge proof to the blockchain, where the zero-knowledge proof is a proof for verifying whether the reporting information is correct and complete, such that each of the one or more pieces of second transaction-supervision ciphertext is decrypted and supervised by a corresponding associated supervision node in a case that the zero-knowledge proof is valid.

In a twelfth aspect, a transaction supervision apparatus based on a blockchain applied to each of one or more associated supervision nodes is provided according to some embodiments of the present disclosure. The apparatus includes an obtaining unit and a processing unit.

The obtaining unit is configured to obtain, by each of the one or more associated supervision nodes, a piece of second transaction-supervision ciphertext of one or more pieces of second transaction-supervision ciphertext from the blockchain, where

the one or more pieces of second transaction-supervision ciphertext are obtained by a payer client node through encrypting reporting information respectively based on one or more supervision public keys respectively corresponding to the one or more associated supervision nodes in a know your customer (KYC) contract, the reporting information being generated based on the KYC contract and second transaction ciphertext, the second transaction ciphertext being constructed based on transaction plaintext of a transaction, and the transaction involving the one or more associated supervision nodes.

The processing unit is configured to the piece of second transaction-supervision ciphertext based on a supervision private key, to obtain and supervise the reporting information.

In a thirteenth aspect, an electronic device is provided according to some embodiments of the present disclosure. The electronic device includes a processor and a memory. The memory is configured to store a computer-executable instruction. The processor, when the electronic device operates, executes the computer-executable instruction stored in the memory to enable the electronic device to perform the transaction supervision method based on a blockchain as described in any one of the second aspect, the third aspect, the fifth aspect, or the sixth aspect.

In a fourteenth aspect, a computer-readable storage medium is provided according to some embodiments of the present disclosure. The computer-readable storage medium stores an instruction. The instruction is executed by a computer to enable the computer to perform the transaction supervision method based on a blockchain as described in any one of the second aspect, the third aspect, the fifth aspect, or the sixth aspect.

**BRIEF DESCRIPTION OF THE DRAWINGS**

FIG. 1 is a structural diagram of a transaction supervision system based on a blockchain according to some embodiments;

FIG. 2 is a flowchart of a transaction supervision method based on a blockchain according to some embodiments;

FIG. 3 is a structural diagram showing transaction-related information according to some embodiments;

FIG. 4 is a schematic diagram showing transaction supervision based on a blockchain according to some embodiments;

FIG. 5 is a dataflow diagram of a transaction supervision method based on a blockchain according to some embodiments;

FIG. 6 is a flowchart of a transaction supervision method based on a blockchain according to some embodiments;

FIG. 7 is a flowchart of another transaction supervision method based on a blockchain according to some embodiments;

FIG. 8 is a flowchart of yet another transaction supervision method based on a blockchain according to some embodiments;

FIG. 9 is a dataflow diagram of a transaction supervision method based on a blockchain according to some embodiments;

FIG. 10 is a structural block diagram of a transaction supervision system based on a blockchain according to some embodiments;

FIG. 11 is a structural diagram of a transaction supervision apparatus based on a blockchain according to some embodiments;

FIG. 12 is a structural diagram of another transaction supervision apparatus based on a blockchain according to some embodiments;

FIG. 13 is a structural block diagram of another transaction supervision system based on a blockchain according to some embodiments;

FIG. 14 is a structural diagram of yet another transaction supervision apparatus based on a blockchain according to some embodiments;

FIG. 15 is a structural diagram of still another transaction supervision apparatus based on a blockchain according to some embodiments; and

FIG. 16 is a structural diagram of an electronic device according to some embodiments.

## DETAILED DESCRIPTION

Hereinafter, the technical solutions according to the embodiments of the present disclosure are to be described in conjunction with the drawings in the embodiments of the present disclosure. In the description of the present disclosure, unless otherwise specified, "/" indicates an "or" relationship between associated objects. For example, A/B may represent A or B. The term "and/or" in the present disclosure only describes an association relationship between associated objects, indicating three possible relationships. For example, A and/or B may represent: only A, both A and B, or only B, where A and B may be singular or plural. Furthermore, in the description of the present disclosure, unless otherwise specified, "a plurality of" refers to two or more. The expression of "at least one of" or a similar expression refers to any combination of items, including any combination of single items or plural items. For example, "at least one of a, b, or c" may represent: a, b, c, a-b, a-c, b-c, or a-b-c, where a, b, and c may be single or multiple. Furthermore, in order to clearly describe the technical solutions of the embodiments of the present disclosure, terms such as "first" and "second" are used to distinguish same or similar items having substantially identical functions and effects in the embodiments of the present disclosure. Those skilled in the art may understand that the terms "first" and "second" do not limit a quantity and an operation order, and the terms "first" and "second" are not necessarily limited to indicate different entities. In the embodiments of the present disclosure, wording "exemplary" or "for example" are used for examples, illustrations or description. Any embodiment or design described as "exemplary" or "for example" in the embodiments of the present disclosure shall not be interpreted as being more preferable or advantageous over other embodiments or designs. Specifically, the terms "exemplary" or "for example" aims to present a relevant concept in a specific manner for easier understanding.

Furthermore, the blockchain architecture and transaction supervision scenarios described in the embodiments of the present disclosure are intended to more clearly illustrate the technical solutions of the embodiments of the present disclosure and do not limit the technical solutions provided herein. Those skilled in the art may understand that there may be a new blockchain architecture and a new transaction supervision scenario, and the technical solutions provided in the embodiments of the present disclosure remain applicable to similar technical problems.

A blockchain is a chain-like storage structure composed of multiple blocks. Each of the blocks stores a certain amount of information, and the blocks are connected in a chronological order of their generation to form a chain. The blockchain has two core characteristics. First, it is difficult to tamper with data therein, and second, the blockchain is decentralized. Based on the two characteristics, information recorded on the blockchain is more authentic and reliable.

Distributed storage of ciphertext on the blockchain can protect user privacy and improve collaboration efficiency among relevant parties of the ciphertext. However, the requirement for ledger consistency in the blockchain involves a data privacy issue, which may be disadvantageous to the supervision of user transaction information. It is assumed that a transaction recorded on the blockchain involves multiple associated supervision parties, including a supervision party supervising a payee of the transaction, a supervision party supervising a payer of the transaction, and a supervision party supervising digital currency involved in the transaction. In such case, these associated supervision parties can obtain the transaction information and verify the compliance and legality of the transaction information, while other supervision parties or users cannot obtain the transaction information. The associated supervision parties may supervise the transaction information by using an ex-post supervision manner, that is, the transaction information of a completed transaction is supervised.

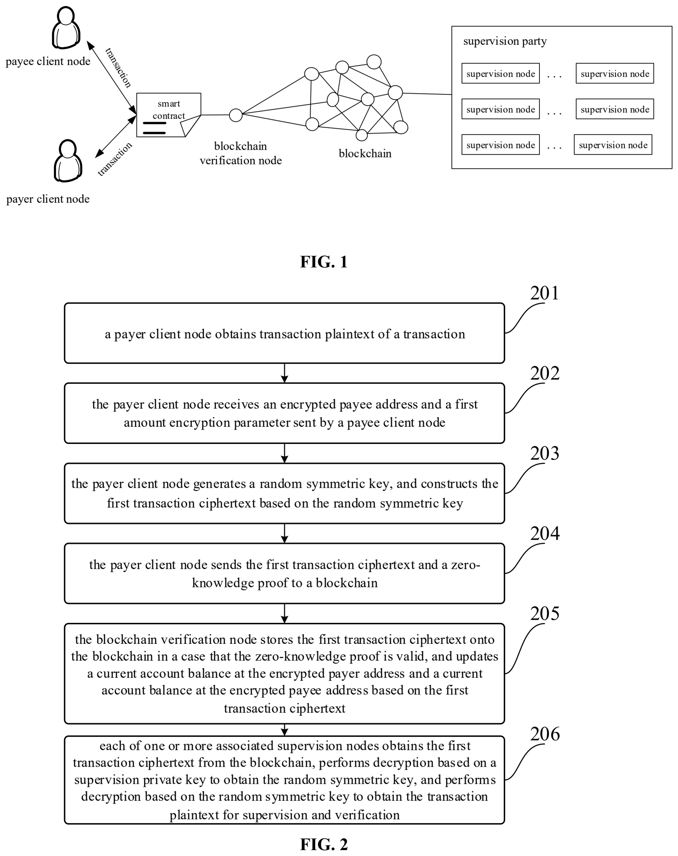

A transaction supervision method based on a blockchain provided according to the embodiments of the present disclosure may be applied to a transaction supervision system based on a blockchain whose structural diagram is shown in FIG. 1. As shown in FIG. 1, in the transaction supervision system based on a blockchain, an associated supervision party may enhance the compliance and legality of transaction information while improving the data privacy of the blockchain. The transaction supervision system based on a blockchain includes: a payee client node, a payer client node, a blockchain, a blockchain verification node, and one or more associated supervision nodes.

The payee client node refers to a client node corresponding to a payee's authenticated user account on the blockchain in a transaction. In a case that the payee client node and the payer client node reach an agreement on the transaction through a smart contract, the payee client node may provide a payee address and a transaction amount. To enhance the payee's privacy and cut off a connection between the payer and payee, the payee client node may encrypt the payee address using a preset encryption method. In a case that an encrypted payee address is used to receive the transaction amount from the payer client node, the payee client node may encrypt the transaction amount and transmit an encrypted transaction amount during the payment process. After receiving the encrypted transaction amount, the payee client node may decrypt the encrypted transaction amount and update a current account balance at the payee address based on a decrypted actual transaction amount.

The payer client node refers to a client node corresponding to a payer's authenticated user account on the blockchain in a transaction. In the case that the payee client node and the payer client node reach the agreement on the transaction through the smart contract, the payer client node performs a payment based on the encrypted payee address and the transaction amount to complete the transaction. The payer client node is further configured for uploading first transaction ciphertext of the transaction to the blockchain. The first transaction ciphertext is obtained by encrypting transaction plaintext of the transaction. Alternatively, in the case that the payee client node and the payer client node reach the agreement on the transaction through the smart contract, the payer client node may perform the payment based on the encrypted payee address and the encrypted transaction amount to complete the transaction. The payer client node is further configured for uploading second transaction ciphertext of the transaction to the blockchain. The second transaction ciphertext is obtained by encrypting the plaintext of the transaction.

The blockchain verification node refers to a node configured for performing verification in the blockchain. For example, the blockchain verification node may verify whether the first transaction ciphertext can be stored on the blockchain and store the verified first transaction ciphertext on the blockchain. The blockchain verification node may further verify whether the second transaction ciphertext can be stored on the blockchain and store the verified second transaction ciphertext on the blockchain.

The one or more associated supervision nodes refer to nodes of supervision parties configured for supervising the transaction. Since supervised objects of supervision nodes are preset, the one or more associated supervision nodes for supervising the transaction are retrieved from the supervision nodes based on the payer client node, the payee client node, and the type of the digital currency corresponding to the transaction amount involved in the transaction. The one or more associated supervision nodes obtain multiple pieces of first transaction-supervision ciphertext of the transaction from the blockchain and decrypt the multiple pieces of first transaction-supervision ciphertext based on supervision private keys respectively corresponding to the one or more associated supervision nodes. Alternatively, the one or more associated supervision nodes obtain multiple pieces of second transaction-supervision ciphertext of the transaction from the blockchain and decrypt the multiple pieces of second transaction-supervision ciphertext based on the supervision private keys respectively corresponding to the one or more associated supervision nodes.

To enhance both data privacy and the compliance and legality of transaction information, as shown in FIG. 2, a transaction supervision method based on a blockchain is provided according to some embodiments of the present disclosure, including the following steps 201 to 206.

In step 201, a payer client node obtains transaction plaintext of a transaction.

In some embodiments of the present disclosure, the transaction plaintext includes payee identity information, a transaction amount, and payer identity information. The payee identity information or the payer identity information may include a user identifier, a physical address, an account name, and the like. The transaction amount represents an actual amount involved in the transaction process, including a numerical value of the transaction amount and a type of digital currency involved in the transaction.

The transaction amount includes a quantity of the transaction amount and the type of the digital currency, for example, 100 units of digital currency with a type P or 20 units of digital currency with a type Q.

In some embodiments of the present disclosure, the transaction involves one or more associated supervision nodes. For example, the associated supervision nodes may include: a supervision node for supervising the payee, a supervision node for supervising the payer, and a supervision node for supervising the digital currency.

In some embodiments of the present disclosure, the transaction may be a cross-border transaction, where the payer client and the payee client belong to different regions. Due to potential significant differences in a supervision manner, a supervised transaction-content, and transaction legality for the cross-border transaction in different regions, the payer client node should first determine multiple associated supervision nodes involved in the cross-border transaction before obtaining the transaction plaintext, thereby enhancing the confidentiality of the transaction plaintext.

In step 202, the payer client node receives an encrypted payee address and a first amount encryption parameter sent by a payee client node.

In some embodiments of the present disclosure, the payer client node may obtain the encrypted payee address and the first amount encryption parameter sent by the payee client node.

It should be noted that the encrypted payee address is obtained by encrypting the payee address based on an asymmetric key-pseudonym algorithm. The asymmetric key-pseudonym algorithm includes two keys (a public key and a private key). If data is encrypted with the public key, only a corresponding private key can be used for decryption. The encryption and decryption use different keys, so the algorithm is referred to as an asymmetric encryption algorithm. The asymmetric encryption algorithm does not require key exchange between encryption and decryption parties, avoiding a risk of key exposure and providing better confidentiality. The asymmetric key-pseudonym algorithm refers to a data processing method in which an original identifier is replaced with newly generated characters. In a case that a pseudonym is generated by a hash function and a tokenization technique, an additional mapping table between the pseudonym and the original identifier is typically generated for identifier reversion.

It should be understood that the asymmetric key-pseudonym algorithm is a general term for a class of algorithms. Two different hash functions may be used as the public key and the private key respectively, where the public key is used to encrypt the payee address, and the private key is used to decrypt the encrypted payee address during implementing the transaction. Information such as an account balance and a transaction history of a payee user account is updated based on the transaction amount. The asymmetric key-pseudonym algorithm may include a Diffie-Hellman algorithm for securely transmitting a shared key over an insecure network, an Elgamal asymmetric encryption algorithm based on Diffie-Hellman key exchange, a knapsack algorithm, and an elliptic curve cryptography algorithm, and the like. The present disclosure does not limit the specific type of the asymmetric key-pseudonym algorithm.

Thus, the payee address is encrypted by using the asymmetric key-pseudonym algorithm. That is, for any client node on the blockchain, whether acting as a payer client node or a payee client node, only one address encryption method is deployed, improving the utilization efficiency of the asymmetric key-pseudonym algorithm and saving system resources for any one of the client nodes. Moreover, for the asymmetric key-pseudonym algorithm, only one key is public, and it is not necessary to send the key to a decryption party, thereby enhancing the confidentiality of the encrypted payee address or an encrypted payer address.

It should also be noted that the payee client node can encrypt the payee address by using the aforementioned asymmetric key-pseudonym algorithm to obtain the encrypted payee address, and the payer client node completes the transaction by transferring some units of digital currency to the encrypted payee address. In this way, a connection between the real identity information of the payer and the payee is cut off, facilitating to protect the privacy of the payee client node. It should be understood that the transaction plaintext includes the payer address, a payee-encrypted transaction amount, the encrypted payee address, and the transaction amount.

In some embodiments of the present disclosure, the first amount encryption parameter is used to encrypt the transaction amount based on a Pedersen algorithm. During a payment process between the payer client node and the payee client node, an encrypted payment amount may be sent as a transaction payment amount. The encrypted payment amount is obtained by encrypting the transaction amount based on a Pedersen commitment using the first amount encryption parameter as a confusion factor.

It should be noted that the Pedersen commitment is a cryptographic algorithm that allows a committer to submit a value without revealing or being able to change the value. During the transaction, the payee client node processes the transaction amount, and the transaction amount remains encrypted and unknown to both the blockchain verification node and the associated supervision nodes involved in the transaction process.

Thus, both the payer client node and the payee client node encrypt the transaction amount by using the Pedersen commitment with different confusion factors, so as to achieve the encryption for the transaction amount and reduce a potential association between the payer client node and the payee client node due to an identical encrypted transaction amount, thereby enhancing the confidentiality of first transaction ciphertext.

In step 203, the payer client node generates a random symmetric key, and constructs the first transaction ciphertext based on the random symmetric key.

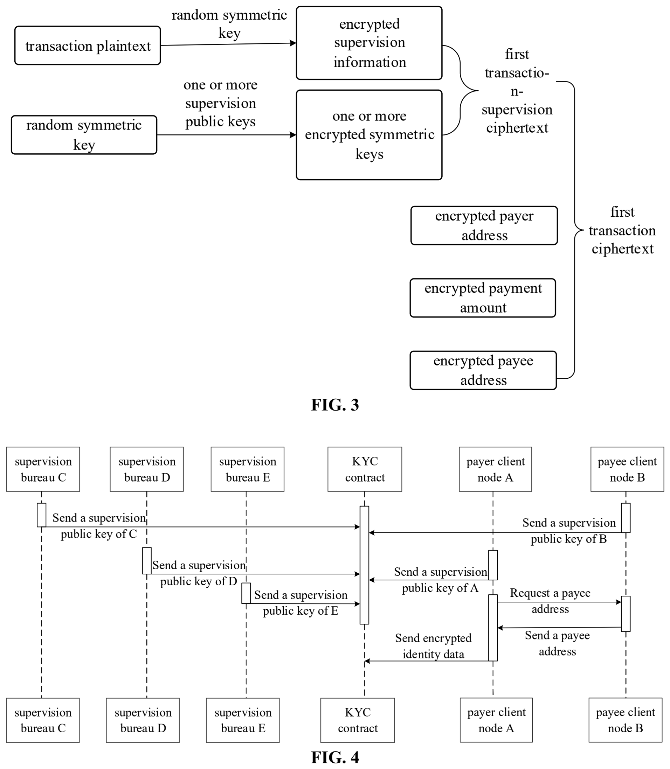

In some embodiments of the present disclosure, as shown in FIG. 3, the first transaction ciphertext includes the encrypted payer address, the encrypted payment amount, the encrypted payee address, and first transaction-supervision ciphertext. The first transaction-supervision ciphertext includes encrypted supervision information and one or more encrypted symmetric keys. The encrypted supervision information is obtained by encrypting the transaction plaintext based on the random symmetric key. The one or more encrypted symmetric keys include: one or more keys obtained by encrypting the random symmetric key respectively based on one or more supervision public keys respectively corresponding to the one or more associated supervision nodes involved in the transaction. The encrypted payment amount is obtained by encrypting the transaction amount based on the first amount encryption parameter and a second amount encryption parameter. The second amount encryption parameter is a parameter used by the payer client node to encrypt the transaction amount.

In some embodiments of the present disclosure, the first transaction ciphertext further includes an expected account balance, where the expected account balance is a remaining amount at the encrypted payer address after paying the transaction amount.

Thus, the first transaction ciphertext stored on the blockchain is the encrypted transaction plaintext. For transaction users (a payer user and a payee user), the transaction amount, user account information, the payee address, and the payer address are all protected and fail to be known by user accounts other than the supervision parties, thereby improving the protection of user privacy.

In some embodiments of the present disclosure, during the process of constructing the first transaction ciphertext, the first amount encryption parameter for encrypting the transaction amount and the encrypted payee address provided by the payee client node are obtained. Then, the transaction amount is encrypted based on the Pedersen commitment with the first amount encryption parameter and the second amount encryption parameter to obtain the encrypted transaction amount. The encrypted payer address is obtained by encrypting the payer address based on the asymmetric key-pseudonym algorithm.

It should be noted that the encrypted payer address may be obtained by encrypting the payer address for this transaction based on the asymmetric key-pseudonym algorithm. Alternatively, the encrypted payer address may be a payee address provided by the payer client node when the payer client node acts as a payee client node in a previous transaction, thus reducing the number of calculations in obtaining the encrypted payer address and saving a system resource of the payer client node. It should be noted that the asymmetric key-pseudonym algorithm is described in step 202 above and will not be repeated here.

Thus, the payee address is encrypted by using the asymmetric key-pseudonym algorithm. That is, for any client node on the blockchain, whether acting as a payer client node or a payee client node, only one address encryption method is deployed, which can improve the utilization efficiency of the asymmetric key-pseudonym algorithm and saving system resources for all client nodes. Moreover, for the asymmetric key-pseudonym algorithm, only one key is public, and it is not necessary to send the key to a decryption party, thereby enhancing the confidentiality of the encrypted payee address or the encrypted payer address.

In some embodiments of the present disclosure, based on an underlying blockchain technology, the payer client node sends the first transaction ciphertext to the blockchain, enabling the one or more associated supervision nodes involved in the transaction to obtain and supervise the first transaction ciphertext.

In some embodiments, the one or more supervision public keys respectively corresponding to the one or more associated supervision nodes involved in the transaction may be stored in a know your customer (KYC) contract. The KYC contract is stored on the blockchain. An element of a vector matrix in the KYC contract includes a user-identity vector, a supervision-identity vector, and a public-key vector, where the user-identity vector stores the payee identity information and the payer identity information; the supervision-identity vector stores identity information of the one or more associated supervision nodes; and the public-key vector stores a payee public key, a payer public key, and the one or more supervision public keys.

In some embodiments of the present disclosure, the KYC contract is a smart contract with characteristics of a public content, immutability, permanent operation, a decentralized and uncontrollable for human, and trustfree (i.e. a transaction can be completed in an untrusted environment). The KYC contract includes a constraint condition and the elements involved in the constraint condition of the vector matrix.

User public keys (including the payee public key and the payer public key) are used to encrypt information sent to the payee client node or the payer client node, and the encrypted information may be decrypted based on user private keys. The user private keys may be used to sign data, and the user public keys may be used to verify signed data. Similarly, the supervision public keys are used to encrypt information sent to the associated supervision nodes, and the encrypted information may be decrypted based on supervision private keys. The supervision private keys may be used to sign data, and the supervision public keys may be used to verify signed data.

In some embodiments of the present disclosure, the KYC contract is stored on the blockchain so that the payer client node, the payee client node, and the one or more supervision nodes authenticated on the blockchain can obtain the payee public key, the payer public key, and the one or more supervision public keys stored in the public-key vector of the KYC contract from the blockchain.

Thus, a transaction rule is recorded in the KYC contract to constrain the transaction, thereby facilitating the confirmation and supervision of the transaction as added, and improving the reliability of the transaction.

In some embodiments, since the supervision public keys are typically generated and uploaded by their respective supervision nodes, a supervision public key uploaded by a supervision node to the KYC contract for the first time may have already been stored in the KYC contract. If, in the KYC contract, there are at least two identical supervision public keys in the one or more supervision public keys, a supervision party unrelated to the transaction may obtain the first transaction ciphertext. To improve the privacy of blockchain data, the transaction supervision method based on a blockchain provided according to some embodiments of the present disclosure further includes: the blockchain verification node, in a case that there are at least two identical supervision public keys in the one or more supervision public keys, sending instruction information to at least two target supervision nodes, where the instruction information is used to instruct the at least two target supervision nodes to update respective supervision public keys in the KYC contract, and the at least two target supervision nodes correspond to the at least two identical supervision public keys in a one-to-one manner.

Thus, by sending the instruction information to the at least two target supervision nodes to instruct the at least two target supervision nodes to update respective supervision public keys in the KYC contract, all the one or more supervision public keys in the KYC contract are different from each other, further improving the confidentiality of the first transaction ciphertext.

In some embodiments of the present disclosure, the one or more supervision public keys include: a first supervision public key, a second supervision public key, and a third supervision public key. An associated supervision node corresponding to the first supervision public key is configured to supervise the payer client node. An associated supervision node corresponding to the second supervision public key is configured to supervise the payee client node. An associated supervision node corresponding to the third supervision public key is configured to supervise the type of digital currency to which the transaction amount belongs, and is also referred to as a digital-currency management node. Reference is made to a case in which the payer client node encrypts to-be-supervised information based on one supervision public key corresponding to one associated supervision node to obtain a piece of transaction supervision ciphertext. The supervision public key corresponding to this associated supervision node is the first supervision public key if this associated supervision node is configured to supervise the payer client node. The supervision public key corresponding to this associated supervision node is the second supervision public key if this associated supervision node is configured to supervise the payee client node. The supervision public key corresponding to this associated supervision node is the third supervision public key if the associated supervision node is configured to supervise the type of digital currency to which the transaction amount belongs. Multiple encrypted symmetric keys are obtained by encrypting the random symmetric key with the first supervision public key, the second supervision public key, and the third supervision public key, respectively.

In some embodiments of the present disclosure, to improve transaction privacy, the payer client node encrypts the random symmetric key to obtain the encrypted symmetric keys, and then sends the encrypted symmetric keys to the one or more associated supervision nodes, respectively. It can be understood that the encryption can be performed by an asymmetric key encryption method, where the random symmetric key is encrypted with the one or more supervision public keys respectively corresponding to the one or more associated supervision nodes, and the one or more associated supervision nodes performs decryption by using their respective supervision private keys to obtain the random symmetric key.

In some embodiments of the present disclosure, any one of the one or more associated supervision nodes has an authority to supervise at least one of the following supervised objects related to the transaction: the payer client, the payee client, and the type of digital currency to which the transaction amount belongs. That is, any associated supervision node of the transaction may supervise one supervised object, two supervised objects, or three supervised objects.

It should be noted that any associated supervision node does not perform supervision on other supervised nodes in a point-to-point manner, but supervises full information involved in the transaction. The full information involved in the transaction relates to the payer, the payee, the type of digital currency, and the transaction amount involved in the transaction.

For example, in a transaction where a first client pays a second client with a third type of digital currency, a first supervision node for supervising the first client may obtain the full information of the transaction; a second supervision node for supervising the second client may obtain the full information of the transaction; and a third supervision node for supervising the third type of digital currency may also obtain the full information of the transaction.

In some embodiments of the present disclosure, the one or more encrypted symmetric keys include keys obtained by encrypting the random symmetric key respectively based on the one or more supervision public keys respectively corresponding to the one or more associated supervision nodes involved in the transaction as well as based on the payer public key corresponding to the payer client node. For example, the payer client node encrypts the random symmetric key based on the first supervision public key to obtain one encrypted symmetric key; the payer client node encrypts the random symmetric key based on the second supervision public key to obtain one encrypted symmetric key; and the payer client node encrypts the random symmetric key based on the third supervision public key to obtain one encrypted symmetric key.

It should be noted that the associated supervision nodes and the supervision public keys have a one-to-one correspondence. For identical associated supervision nodes, the supervision public keys used to encrypt the random symmetric key are also identical. That is, the first supervision public key, the second supervision public key, and the third supervision public key may be different from each other, not all identical, or all identical.

In a first case, the first supervision public key is data 1; the second supervision public key is data 2; and the third supervision public key is data 3.

In a second case, the first supervision public key is data 4; and both the second supervision public key and the third supervision public key are data 5.

In a third case, both the first supervision public key and the second supervision public key are data 6; and the third supervision public key is data 7.

In a fourth case, the first supervision public key, the second supervision public key, and the third supervision public key are all data 8.

It can be understood that the payer client node may encrypt the random symmetric key respectively based on the first supervision public key, the second supervision public key, and the third supervision public key under any of the above cases. Before encrypting the random symmetric key, the payer client node may determine whether the first supervision public key, the second supervision public key, and the third supervision public key are identical. In a case that there are identical supervision public keys, the random symmetric key is encrypted once, and an encrypted result is determined as the encrypted symmetric key for each of the identical supervision public keys. The number of encrypting the random symmetric key to obtain the encrypted symmetric key is not limited in the present disclosure.

It should also be noted that the random symmetric key may be generated by a random number generator. Typically, a data volume of the transaction plaintext is larger than that of the random symmetric key. To achieve transaction supervision, the random symmetric key is used to encrypt the transaction plaintext to obtain encrypted supervision information, and the random symmetric key is encrypted respectively based on the one or more supervision public keys to obtain one or more encrypted symmetric keys. The first transaction-supervision ciphertext includes the encrypted supervision information and the one or more encrypted symmetric keys. Each of the one or more associated supervision nodes uses its supervision private key to decrypt a corresponding encrypted symmetric key that is encrypted with the supervision public key corresponding to this associated supervision node to obtain the random symmetric key, so that the encrypted supervision information may be decrypted after the random symmetric key being obtained. The above encryption and decryption manner meets a blockchain-based information confidentiality requirement.

Thus, in the above encryption and decryption process, one encryption and decryption process is performed on the transaction plaintext with a large data volume, and multiple encryption and decryption processes are performed on the random symmetric key with a small data volume, improving encryption and decryption efficiency and avoid performing multiple encryptions on the transaction plaintext. By converting multiple asymmetric encryptions of complex information (that is, the transaction plaintext) into symmetric encryption processes, it can improve the encryption and decryption efficiency. In a case that a data transmission distance between multiple associated supervision parties involved in the transaction is long, the encryption and decryption efficiency can be significantly improved.

For example, it is assumed that a payer client node A constructs a transaction from an encrypted payer address $address_1$ storing digital currency T to an encrypted payee address $address_2$ of a payee client node B. It is further assumed that the payer client node A stores x units of digital currency T at $address_1$, s1 represents the first amount encryption parameter, s2 represents the second amount encryption parameter, and the transaction amount is 100. Accordingly, the payer client node constructs the first transaction ciphertext as:

$$a = address_1 \xrightarrow{g^{100T} \times h^{s2}} address_2 + input + metadata$$

The meaning of the above first transaction ciphertext is as follows. $g^{100} \times h^{s2}$ units of the digital currency T are transferred from the $address_1$ to the $address_2$, and a current account balance in the digital currency T at the $address_1$ is $g^{x-100} \times p^{s1-s2}$. $g^{100} \times h^{s2}$ is obtained by encrypting the transaction amount 100 based on the Pedersen commitment using s2 as the confusion factor, and $g^{x-100} \times h^{s1-s2}$ is obtained by encrypting x-100 based on the Pedersen commitment using s1-s2 as the confusion factor.

The metadata consists of four parts, including three encrypted symmetric keys obtained by encrypting the random symmetric key respectively based on:

the first supervision public key corresponding to a first associated supervision node having an authority to supervise the payer client node;

the second supervision public key corresponding to a second associated supervision node having an authority to supervise the payee client node; and

the third supervision public key corresponding to a third associated supervision node having an authority to supervise the type of digital currency to which the transaction amount belongs, and

the encrypted supervision information obtained by encrypting the transaction plaintext based on the random symmetric key. The transaction plaintext includes identity information of the payer client node A, identity information of the payee client node B, and transaction information of the transaction. The transaction information of the transaction includes the transaction amount, a transaction time, a transaction condition, transaction content, and the like.

In step 204, the payer client node sends the first transaction ciphertext and a zero-knowledge proof to a blockchain.

In some embodiments of the present disclosure, the zero-knowledge proof is used to verify whether the first transaction ciphertext is correct and complete.

In some embodiments of the present disclosure, the zero-knowledge proof is used to perform at least one of the following:

verifying, based on the first amount encryption parameter, the second amount encryption parameter, and the Pedersen commitment, whether the transaction amount is greater than or equal to 0 and whether the current account balance at the encrypted payer address is greater than or equal to the transaction amount; or

verifying, based on the one or more supervision public keys and the first transaction-supervision ciphertext, whether the first transaction ciphertext is correct.

In a first example, the Pedersen commitment means being verifiable and being equal or not. That is, both the payer client node and the payee client node encrypt the transaction amount to obtain two encrypted transaction amounts, so that the blockchain verification node can perform verification to determine whether funds is illegally created or destroyed in the transaction. By proving that the two encrypted transaction amounts are equal, it is possible to verify that the transaction amount as included is greater than or equal to 0, and that the account balance at the payer address is greater than or equal to the transaction amount.

In a second example, the payer public key corresponding to payer location information is retrieved in the KYC contract. If the payer public key corresponding to the payer location information can decrypt the encrypted payer address, the payer location information is verified as correct.

In a third example, the payee public key corresponding to payee location information is retrieved in the KYC contract. If the payee public key corresponding to the payee location information can decrypt the encrypted payee address, the payee location information is verified as correct.

In a fourth example, the first supervision public key of the first associated supervision node corresponding to the payer location information is retrieved in the KYC contract, and the random symmetric key is encrypted based on the first supervision public key to obtain a first encrypted symmetric key; the second supervision public key of the second associated supervision node corresponding to the payee location information is retrieved in the KYC contract, and the random symmetric key is encrypted based on the second supervision public key to obtain a second encrypted symmetric key; and the third supervision public key of the third associated supervision node corresponding to the type of digital currency is retrieved in the KYC contract, and the random symmetric key is encrypted based on the third supervision public key to obtain a third encrypted symmetric key. If the first transaction ciphertext can be obtained by encrypting the first transaction-supervision ciphertext based on the random symmetric key, the first transaction ciphertext is verified as correct.

Thus, through the zero-knowledge proof and the Pedersen commitment, the blockchain verification node verifies the correctness and completeness of the first transaction ciphertext without transaction plaintext. Transaction-related information stored on the blockchain is immutable, thereby improving the correctness and completeness of the transaction-related information stored on the blockchain and saving storage resources on the blockchain.

In step 205, the blockchain verification node stores the first transaction ciphertext onto the blockchain in a case that the zero-knowledge proof is valid, and updates a current account balance at the encrypted payer address and a current account balance at the encrypted payee address based on the first transaction ciphertext.

In some embodiments of the present disclosure, the blockchain verification node is a node on the blockchain that verifies on-chain data information. Data information that passes verification may be stored on the blockchain.

In some embodiments of the present disclosure, the blockchain verification node, based on a verification target of the zero-knowledge proof, presets a verification program and inputs the first transaction ciphertext and the KYC contract into the preset verification program, so as to determine whether the zero-knowledge proof is valid.

In some embodiments of the present disclosure, after storing the first transaction ciphertext onto the blockchain, the transaction is completed. The first transaction ciphertext can be viewed, but only the associated supervision parties related to the transaction can decrypt the first transaction ciphertext or the first transaction-supervision ciphertext to obtain the transaction plaintext.

In some embodiments of the present disclosure, for the payer client node, it is assumed that a first address stores A units of digital currency, a second address stores B units of digital currency, and the payment amount is C units of digital currency. In a case that C is greater than A, greater than B, and less than (A+B), the current transaction may actually be implemented through two transactions. In this example, both the first address and the second address are payer addresses. The blockchain verification node updates the balance at the payer address and the balance at the payee address based on the first transaction ciphertext after determining that the verification is passed. It can be understood that the payer client node may merge or transfer the amount of digital currency stored at the first address and the second address.

It should be noted that if the current transaction may actually be implemented according to two pieces of transaction information, then the two pieces of transaction information are recorded on the blockchain. However, the associated supervision nodes may locally record a flow direction of the digital currency in the transaction for the payer client node.

In step 206, each of one or more associated supervision nodes obtains the first transaction ciphertext from the blockchain, performs decryption based on a supervision private key to obtain the random symmetric key, and performs decryption based on the random symmetric key to obtain the transaction plaintext for supervision and verification.

In some embodiments of the present disclosure, any one of the one or more associated supervision nodes obtains the first transaction ciphertext from the blockchain, and decrypts the first transaction ciphertext using the supervision private key corresponding to the associated supervision node, thereby successfully decrypting a corresponding encrypted symmetric key of the one or more encrypted symmetric keys to obtain the random symmetric key. This associated supervision node decrypts the encrypted supervision information in the first transaction ciphertext based on the obtained random symmetric key, to obtain the transaction plaintext.

For example, before the transaction, as shown in FIG. 4, a payer client node A, a payee client node B, and a supervision bureau C, a supervision bureau D, and a supervision bureau E as the associated supervision nodes are added to the blockchain in advance. The payer client node A and the payee client node B are required to register their respective institutional information in the KYC contract before being added to the blockchain, and their user public keys are also stored in the KYC contract at this time. The user private keys of the payer client node A and the payee client node B are stored in their respective digital-currency management modules. The supervision bureau C, the supervision bureau D, and the supervision bureau E are also required to register their respective institutional information in the KYC contract before being added to the blockchain, and their supervision public keys are also stored in the KYC contract at this time. The supervision private keys are kept by their respective associated supervision nodes themselves for signing transaction ciphertext based on the supervision private keys.

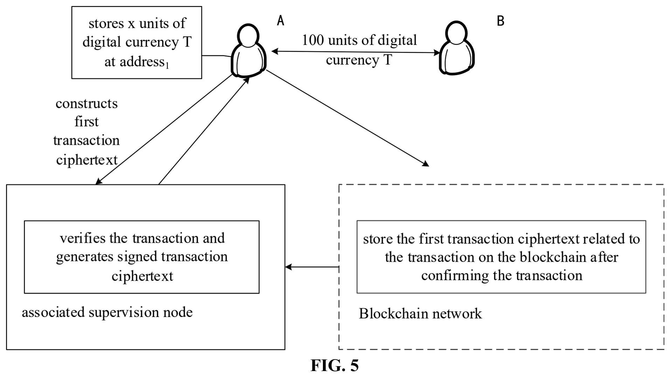

Based on the above example, as shown in FIG. 5, it is assumed that the payer client node A constructs a transaction from an encrypted payer address $address_1$ storing digital currency T to an encrypted payee address $address_2$ of the payee client node B, the payer client node A stores x units of digital currency T at $address_1$, s1 represents the first amount encryption parameter, s2 represents the second amount encryption parameter, and the transaction amount is 100. The above transaction is sent to the supervision bureau C, the supervision bureau D, and the supervision bureau E. After verifying the transaction, the supervision bureau C, the supervision bureau D, and the supervision bureau E send signed encrypted transaction information to the payer client node A. Then the payer client node A sends the transaction to the blockchain. After being confirmed by the blockchain verification node, the transaction is continued, and the first transaction ciphertext related to the transaction is stored on the blockchain for the supervision bureau C, the supervision bureau D, and the supervision bureau E to check an on-chain status of the transaction and update a transaction state.

In some embodiments, any one of the one or more associated supervision nodes has an authority to supervise at least one of the following supervised objects involved to the transaction: the payer client, the payee client, and the type of digital currency to which the transaction amount belongs. That is, any associated supervision node of the transaction may supervise one supervised object, two supervised objects, or three supervised objects.

In some embodiments, after the one or more associated supervision nodes perform decryption based on the random symmetric key to obtain the transaction plaintext for supervision and verification, the method further includes:

signing, by the one or more associated supervision nodes, the first transaction ciphertext based on respective the supervision private keys to obtain signed ciphertext in a case that the transaction plaintext is correct and complete; and
sending, by the one or more associated supervision nodes, the signed ciphertext to the payer client node.

It should be understood that the signed ciphertext may include a transaction identifier. The transaction identifier may indicate a correspondence between the signed ciphertext and the transaction.

Thus, by using the signed ciphertext to indicate whether the transaction has passed supervision, the supervision status of the transaction information obtained by other associated supervision nodes subsequently may be informed, avoiding repeated determinations on the first transaction ciphertext of the transaction and improving supervision efficiency.

For example, based on the example in step 203, on the basis of the three encrypted symmetric keys sent by the payer client node A, the three associated supervision nodes related to the transaction supervision information of the transaction on the blockchain. Each of the three associated supervision nodes uses its respective supervision private key to decrypt the one or more encrypted symmetric keys in the first transaction ciphertext, to obtain the random symmetric key, and then uses the random symmetric key to decrypt the encrypted supervision information, thus obtaining the transaction plaintext. That is, the payee identity information, the payer identity information, and the transaction amount. However, supervision nodes unrelated to the transaction cannot decrypt the encrypted supervision information even if they obtain it.

Thus, the payer client node obtains the transaction plaintext, receives the encrypted payee address and the first amount encryption parameter sent by the payee client node, generates the random symmetric key, and constructs the first transaction ciphertext based on the random symmetric key, so that the confidentiality of transaction information can be improved, and the protection of private information in transaction information stored on the blockchain can be enhanced.

It should be noted that the one or more encrypted symmetric keys in the first transaction ciphertext are obtained by respectively encrypting the random symmetric key based on the one or more supervision public keys respectively corresponding to the one or more associated supervision nodes involved in the transaction. The encrypted supervision information in the first transaction ciphertext is obtained by encrypting the transaction plaintext based on the random symmetric key. That is, the random symmetric key is encrypted based on the one or more supervision public keys, enabling the one or more associated supervision nodes to decrypt the one or more encrypted symmetric keys based on their respective supervision private keys to obtain the random symmetric key. In this way, multiple encryptions of the transaction plaintext can be avoided, and converting multiple asymmetric encryptions of complex information (that is, the transaction plaintext) into one symmetric encryption process can improve the encryption and decryption efficiency. In a case that a data transmission distance between multiple associated supervision parties involved in the transaction is long, the encryption and decryption efficiency can be significantly improved.

The solutions of the embodiments of the present disclosure is mainly introduced from the perspective of a system method above. From the perspective of a single-side method, when applied to a payer client node, the method includes:

obtaining transaction plaintext of a transaction, where the transaction plaintext includes payee identity information, a transaction amount, and payer identity information;

receiving an encrypted payee address and a first amount encryption parameter sent by a payee client node;

generating a random symmetric key, and constructing first transaction ciphertext based on the random symmetric key, where the first transaction ciphertext includes an encrypted payer address, an encrypted payment amount, the encrypted payee address, and first transaction-supervision ciphertext, where

the first transaction-supervision ciphertext includes encrypted supervision information and one or more encrypted symmetric keys, the encrypted supervision information being obtained by encrypting the transaction plaintext based on the random symmetric key; and the one or more encrypted symmetric keys including: one or more keys obtained by respectively encrypting the random symmetric key based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount; and

sending the first transaction ciphertext and a zero-knowledge proof to a blockchain, where the zero-knowledge proof is used to verify whether the first transaction ciphertext is correct and complete.

Thus, the payer client node obtains the transaction plaintext, receives the encrypted payee address and the first amount encryption parameter sent by the payee client node, generates the random symmetric key, and constructs the first transaction ciphertext based on the random symmetric key, so that the confidentiality of transaction information can be improved, and the protection of private information in transaction information stored on the blockchain can be enhanced. The one or more encrypted symmetric keys in the first transaction ciphertext are obtained by respectively encrypting the random symmetric key based on the one or more supervision public keys respectively corresponding to the one or more associated supervision nodes involved in the transaction. The encrypted supervision information in the first transaction ciphertext is obtained by encrypting the transaction plaintext based on the random symmetric key. That is, the random symmetric key is encrypted based on the one or more supervision public keys, enabling the one or more associated supervision nodes to decrypt the one or more encrypted symmetric keys based on their respective supervision private keys to obtain the random symmetric key. In this way, multiple encryptions of the transaction plaintext can be avoided, and by converting multiple asymmetric encryptions of complex information (that is, the transaction plaintext) into one symmetric encryption process, it can improve the encryption and decryption efficiency. In a case that a data transmission distance between multiple associated supervision parties involved in the transaction is long, the encryption and decryption efficiency can be significantly improved.

From the perspective of a single-side method, when applied to the one or more associated supervision nodes, the method includes:

obtaining first transaction ciphertext from a blockchain;

performing decryption based on a supervision private key to obtain a random symmetric key; and

performing decryption based on the random symmetric key to obtain transaction plaintext for supervision and verification, where
the first transaction ciphertext includes an encrypted payer address, an encrypted payment amount, an encrypted payee address, and first transaction-supervision ciphertext, where

the first transaction-supervision ciphertext information includes encrypted supervision information and one or more encrypted symmetric keys, the encrypted supervision information being obtained by encrypting the transaction plaintext based on the random symmetric key; and the one or more encrypted symmetric keys including: one or more keys obtained by respectively encrypting the random symmetric key based on one or more supervision public keys respectively corresponding to the one or more associated supervision nodes involved in a transaction, and

the encrypted payment amount is obtained by encrypting a transaction amount based on a first amount encryption parameter and a second amount encryption parameter, the first amount encryption parameter being a parameter used by a payee client node to encrypt the transaction amount, and the second amount encryption parameter being a parameter used by a payer client node to encrypt the transaction amount; and

the transaction plaintext includes payee identity information, the transaction amount, and payer identity information.

Thus, based on the one or more supervision public keys respectively corresponding to the one or more associated supervision nodes in the KYC contract, the transaction plaintext is encrypted to obtain the encrypted supervision information. As such, each associated supervision node on the blockchain obtains a corresponding random symmetric key through its supervision private key. The random symmetric key is only obtained by a corresponding associated supervision node, rather than other supervision nodes, thereby improving the confidentiality of transaction information.

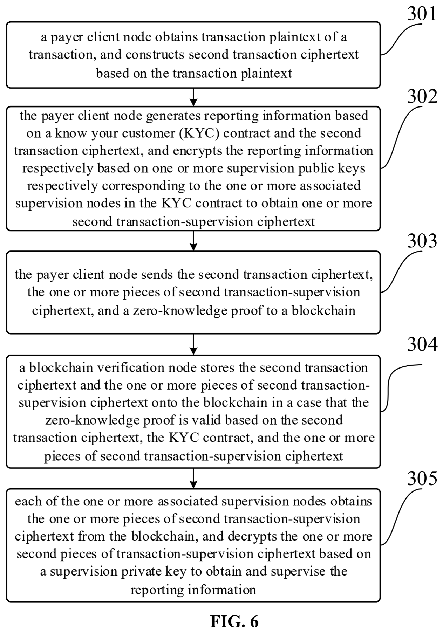

To enhance both data privacy and the compliance and legality of transaction information, as shown in FIG. 6, a transaction supervision method based on a blockchain is provided according to some embodiments of the present disclosure, including the following steps 301 to 305.

In step 301, a payer client node obtains transaction plaintext of a transaction, and constructs second transaction ciphertext based on the transaction plaintext.

In some embodiments, the transaction involves one or more associated supervision nodes. For example, the one or more associated supervision nodes may include: a supervision node for supervising the payee, a supervision node for supervising the payer, and a supervision node (also referred to as a digital-currency management node) for supervising the type of digital currency.

In some embodiments, based on an underlying blockchain technology, the transaction can be directly implemented by using a digital-asset account and the second transaction ciphertext can be recorded on the blockchain. The transaction is completed in a case that the second transaction ciphertext is confirmed after being uploaded to the blockchain.

In some embodiments, the transaction plaintext includes payee identity information, a transaction amount, and payer identity information. The second transaction ciphertext includes an encrypted payer address, a payee-encrypted transaction amount, an encrypted payee address, and a payer-encrypted transaction amount.

Thus, the second transaction ciphertext stored on the blockchain is obtained based on the transaction plaintext. For transaction-involved users (a payer user and a payee user), the transaction amount, user account information, the payee address and the payer address are all protected and cannot be known by user accounts other than the supervision parties, thereby improving the protection of user privacy.

In some embodiments of the present disclosure, the payer client node obtains the encrypted payee address and the transaction amount in the transaction. The transaction amount represents the actual amount in the transaction process. When constructing the second transaction ciphertext, the payee-encrypted transaction amount and the encrypted payee address provided by the payee client node are firstly obtained, then the transaction amount is encrypted based on a Pedersen commitment to obtain the payer-encrypted transaction amount, and finally the payer address is encrypted based on an asymmetric key-pseudonym algorithm to obtain the encrypted payer address.

It should be noted that in the transaction process, the encrypted payee address obtained by the payer client node is generated by encrypting the payee address based on the asymmetric key-pseudonym algorithm, and similarly, the encrypted payer address is obtained by encrypting the payer address based on the asymmetric key-pseudonym algorithm.

It should also be noted that the payee client node may encrypt the payee address by using the aforementioned asymmetric key-pseudonym algorithm to obtain the encrypted payee address, and the payer client node completes the transaction by transferring the amount of digital currency to the encrypted payee address. In this way, a connection between the real identity information of the payer and the payee is cut off, conductive to protecting the privacy of the payee client node.

In some embodiments, the asymmetric key-pseudonym algorithm includes two keys (a public key and a private key). If data is encrypted with the public key, only a corresponding private key can be used for decryption. The encryption and decryption are performed by using different keys, so the algorithm is referred to as an asymmetric encryption algorithm. The asymmetric encryption algorithm does not require key exchange between encryption and decryption parties, avoiding a risk of key exposure and providing better confidentiality. The asymmetric key-pseudonym algorithm refers to a data processing method in which an original identifier is replaced with newly generated characters. In a case that a pseudonym is generated by a hash function and a tokenization technique, an additional mapping table between the pseudonym and the original identifier is typically generated for identifier reversion.

It should be understood that the asymmetric key-pseudonym algorithm is a general term for a class of algorithms. Two different hash functions may be used as the public key and the private key respectively, where the public key is used to encrypt the payer address or the payee address, and the private key is used to decrypt the encrypted payer address or the encrypted payee address during implementing the transaction. An account balance of a payer user or a payee user, and an account transaction record are updated based on the transaction amount. The asymmetric key-pseudonym algorithm may include a Diffie-Hellman algorithm for securely transmitting a shared key over an insecure network, an Elgamal asymmetric encryption algorithm based on Diffie-Hellman key exchange, a knapsack algorithm, and an elliptic curve cryptography algorithm. The present disclosure does not limit the specific type of the asymmetric key-pseudonym algorithm.

Thus, both the payer address and the payee address are encrypted by using the asymmetric key-pseudonym algorithm. That is, for any client node on the blockchain, whether acting as a payer client node or a payee client node, only one address encryption method is deployed, improving the utilization efficiency of the asymmetric key-pseudonym algorithm and saving system resources for all client nodes. Moreover, for the asymmetric key-pseudonym algorithm, only one key is public, it is not necessary to send the key to a decryption party, thereby enhancing the confidentiality of the encrypted payee address or the encrypted payer address.

In some embodiments, the encrypted payment amount is obtained by encrypting the transaction amount based on the Pedersen commitment using a first amount encryption parameter as a confusion factor; and the encrypted payee amount is obtained by encrypting the transaction amount based on the Pedersen commitment using a second amount encryption parameter as the confusion factor. The transaction amount includes a quantity of the transaction amount and the type of the digital currency, for example, 100 units of digital currency with a type P or 20 units of digital currency with a type Q.

It should be noted that the Pedersen commitment is a cryptographic algorithm that allows a committer to submit a value without revealing or being able to change the value. During the transaction, for the transaction amount processed by the payee client node, it remains encrypted and unknown to both a blockchain verification node and the associated supervision nodes involved in the transaction process.

Thus, both the payer client node and the payee client node encrypt the transaction amount by using the Pedersen commitment with different confusion factors, so as to achieve the encryption for the transaction amount while reduce a potential association between the payer client node and the payee client node due to an identical encrypted transaction amount, thereby enhancing the confidentiality of the second transaction ciphertext.

For example, a payer client node A constructs a transaction from an encrypted payer address $address_1$ storing digital currency T to an encrypted payee address $address_2$ of a payee client node B. It is assumed that the payer client node A stores x units of digital currency T at $address_1$, s1 represents the first amount encryption parameter, s2 represents the second amount encryption parameter, and the transaction amount is 100. Accordingly, the payer client node generates the second transaction ciphertext as:

$$\text{a} = address_1 \xrightarrow{g^{100} \times h^{s2}} address_2 + g^{x-100} \times h^{s1-s2}.$$

The meaning of the above second transaction ciphertext is as follows. $g^{100} \times h^{s2}$ units of the digital currency T are transferred from the $address_1$ to the $address_2$, and a current account balance of the digital currency T at the $address_1$ is $g^{x-100} \times h^{s1-s2}$. $g^{100} \times h^{s2}$ is obtained by encrypting the transaction amount 100 based on the Pedersen commitment using s2 as the confusion factor, and $g^{x-100} \times h^{s1-s2}$ is obtained by encrypting x-100 based on the Pedersen commitment using s1-s2 as the confusion factor.

In step 302, the payer client node generates reporting information based on a know your customer (KYC) contract and the second transaction ciphertext, and encrypts the reporting information respectively based on one or more supervision public keys respectively corresponding to the one or more associated supervision nodes in the KYC contract to obtain one or more second transaction-supervision ciphertext.

In some embodiments of the present disclosure, the KYC contract is a smart contract with characteristics of a public content, immutability, permanent operation, a decentralized and uncontrollable for human, and trustfree (i.e. a transaction can be completed in an untrusted environment), and the like. The KYC contract includes a constraint condition and the elements involved in the constraint condition.

In some embodiments, to achieve transaction supervision, an element of a vector matrix in the KYC contract includes a user-identity vector, a supervision-identity vector, and a public-key vector, where the user-identity vector stores the payee identity information and the payer identity information; the supervision-identity vector stores identity information of the one or more associated supervision nodes; and the public-key vector stores a payee public key, a payer public key, and the one or more supervision public keys.

User public keys (including the payee public key and the payer public key) are used to encrypt information sent to the payee client node or the payer client node, and the encrypted information may be decrypted based on a user private key. The user private key may be used to sign data, and a corresponding user public key may be used to verify signed data. Similarly, the supervision public keys are used to encrypt information sent to the associated supervision nodes respectively, and the encrypted information may be decrypted based on a supervision private key. The supervision private key may be used to sign data, and a coresponding supervision public key may be used to verify signed data. A digital-currency contract-address is used to record smart contract information that the digital currency involved in the transaction follows, such as the transaction amount, a transaction time, and the like.

In some embodiments of the present disclosure, any one of the one or more associated supervision nodes has an authority to supervise at least one of the following supervised objects related to the transaction: the payer client, the payee client, and the type of digital currency to which the transaction amount belongs. That is, any associated supervision node of the transaction may supervise one supervised object, two supervised objects, or three supervised objects.

It should be noted that any associated supervision node does not supervise other supervised nodes point-to-point but supervises full information in the transaction. The full information in the transaction relates to the payer, the payee, the type of digital currency, and the transaction amount involved in the transaction.

For example, in a transaction where a first client pays a second client with a third type of digital currency: a first supervision node for supervising the first client may obtain the full information of the transaction; a second supervision node for supervising the second client may obtain the full information of the transaction; and a third supervision node for supervising the third type of digital currency may obtain the full information of the transaction.

It should be noted that the associated supervision nodes and the supervision public keys have a one-to-one correspondence. If the same one associated supervision node is used for supervision, the same one supervision public key is used to encrypt the random symmetric key. That is, the first supervision public key, the second supervision public key, and the third supervision public key may all be different, not all identical, or all identical.

In a case, the first supervision public key is data 1; the second supervision public key is data 2; and the third supervision public key is data 3.

In another case, the first supervision public key is data 4; and both the second supervision public key and the third supervision public key are data 5.

In yet another case, the first supervision public key, the second supervision public key, and the third supervision public key are all data 6.

Thus, a transaction rule is recorded in the KYC contract to constrain the transaction, thereby facilitating the confirmation and supervision of the adding of the transaction, and improving the reliability of the transaction.

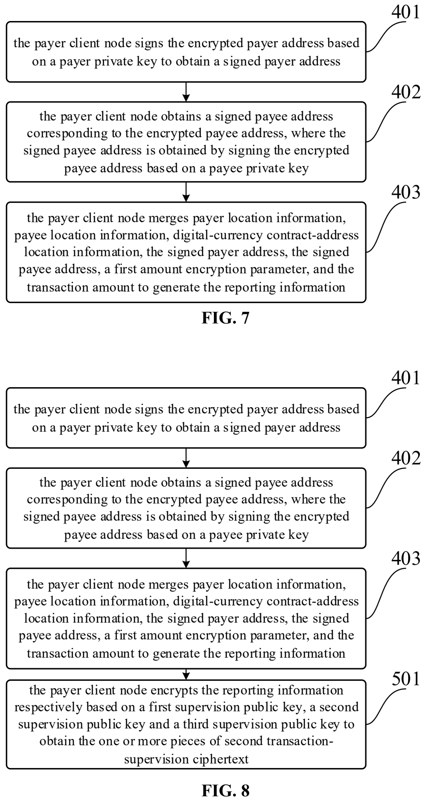

In some embodiments, as shown in FIG. 7, the generating reporting information based on a KYC contract and the second transaction ciphertext in step 302 may be implemented by the following steps 401 to 403.

In step 401, the payer client node signs the encrypted payer address based on a payer private key to obtain a signed payer address.

In some embodiments of the present disclosure, during transmission and decryption, the signed payer address is obtained by a signing manner, enhancing the confidentiality of the payer address, enabling the blockchain verification node to determine the payer associated with the signed payer address. As such, the blockchain verification node performs verification on information reducing errors during decryption, i.e. the encrypted payer address received by the blockchain verification node is the same as the encrypted payer address sent by the payer client node.

In step 402, the payer client node obtains a signed payee address corresponding to the encrypted payee address, where the signed payee address is obtained by signing the encrypted payee address based on a payee private key.

In some embodiments of the present disclosure, similar to step 301, during transmission and decryption, the signed payee address can enhance the confidentiality of the payee address, enable the blockchain verification node to determine the payee associated with the signed payee address. As such, the blockchain verification node performs verification on information, reducing errors during decryption, i.e. the encrypted payee address received by the blockchain verification node is the same as the encrypted payee address sent by the payee client node.

In step 403, the payer client node merges payer location information, payee location information, digital-currency contract-address location information, the signed payer address, the signed payee address, a first amount encryption parameter, and the transaction amount to generate the reporting information.

In some embodiments of the present disclosure, the payer location information refers to location information of the payer public key corresponding to the payer client node in the KYC contract; the payee location information refers to location information of the payee public key corresponding to a payee client node in the KYC contract, the payee client node being a client node corresponding to a payee of the transaction; the digital-currency contract-address location information refers to location information of a digital-currency contract-address corresponding to the type of digital currency to which the transaction amount belongs in the KYC contract; and the first amount encryption parameter is used to encrypt the transaction amount to obtain the payer-encrypted transaction amount.

In some embodiments of the present disclosure, the reporting information includes partial information involved in the transaction and partial information involved in the KYC contract in the transaction.

For example, a payer client node A constructs a transaction from an encrypted payer address $address_1$ storing digital currency T to an encrypted payee address $address_2$ of a payee client node B. Based on the above example, the generated reporting information is:

$$\text{info} = [i, j, \text{index}, \text{sign } sk_A(address_1), \text{sign } sk_B(address_2), s1, 100],$$

where i represents the payer location information, j represents the payee location information, index represents the digital-currency contract-address location of the digital currency T, $\text{sign } sk_A(address_1)$ represents the signed payer address, $\text{sign } sk_B(address_2)$ represents the signed payee address, s1 represents the first amount encryption parameter, and 100 represents the transaction amount.

Thus, the signed payer address, the signed payee address, the first amount encryption parameter, and the transaction amount related to the transaction, as well as the payer location information, the payee location information, and the digital-currency contract-address location information related to the KYC contract are merged to generate the reporting information, so that the reporting information incorporates all transaction-related information, and it can be verified whether the transaction is correct, complete and legal based on the reporting information, thereby accelerating transaction validation and completion.

In some embodiments, on the basis of FIG. 7, as shown in FIG. 8, the encrypting the reporting information respectively based on one or more supervision public keys in the KYC contract to obtain one or more second transaction supervision ciphertext in step 302 may be implemented by the following step 501.

In step 501, the payer client node encrypts the reporting information respectively based on a first supervision public key, a second supervision public key and a third supervision public key to obtain the one or more pieces of second transaction-supervision ciphertext.

In some embodiments of the present disclosure, the one or more supervision public keys include: the first supervision public key, the second supervision public key, and the third supervision public key. An associated supervision node corresponding to the first supervision public key is configured to supervise the payer client node. An associated supervision node corresponding to the second supervision public key is configured to supervise the payee client node. An associated supervision node corresponding to the third supervision public key is configured to supervise the type of digital currency to which the transaction amount belongs. The first supervision public key is a supervision public key corresponding to the payer location information in the KYC contract; the second supervision public key is a supervision public key corresponding to the payee location information in the KYC contract; and the third supervision public key is a supervision public key corresponding to the digital-currency contract-address location information in the KYC contract.

It should be understood that the associated supervision parties corresponding to both transaction parties (the payer and the payee) involved in the transaction, and the associated supervision party corresponding to the transaction amount respectively encrypt the reporting information based on the supervision public keys respectively corresponding to the associated supervision parties, to obtain the one or more pieces of second transaction-supervision ciphertext.

For example, it is assumed that a payer client node A constructs a transaction from an encrypted payer address $address_1$ storing digital currency T to an encrypted payee address $address_2$ of a payee client node B. Based on the above example, the one or more second transaction-supervision ciphertext may be recorded in one vector:

$$\text{metadata} = [\text{Enc } cbpk_M(\text{info}), \text{Enc } cbpk_N(\text{info}), \text{Enc } cbpk_P(\text{info})],$$

where cbpk$_M$ represents the first supervision public key, Enc cbpk$_M$ (info) represents the second transaction-supervision ciphertext obtained by encrypting the reporting information based on the first supervision public key, cbpk$_N$ represents the second supervision public key, Enc cbpk$_N$(info) represents the second transaction-supervision ciphertext obtained by encrypting the reporting information based on the second supervision public key, cbpk$_P$ represents the third supervision public key, and Enc cbpk$_P$(info) represents the second transaction-supervision ciphertext obtained by encrypting the reporting information based on the third supervision public key.

Thus, among the one or more pieces of second transaction-supervision ciphertext, there is a piece of second transaction supervision ciphertext that can be decrypted by any one of: the associated supervision parties corresponding to both transaction parties (the payer and the payee) involved in the transaction, and the associated supervision party corresponding to the transaction amount. In this way, an associated supervision node may decrypt one of the one of more pieces of second transaction supervision ciphertext sent to the blockchain, facilitating the supervision of the second transaction-supervision ciphertext.

In step 303, the payer client node sends the second transaction ciphertext, the one or more pieces of second transaction-supervision ciphertext, and a zero-knowledge proof to a blockchain.

In some embodiments, the zero-knowledge proof is used to verify whether the reporting information is correct and complete.

In some embodiments, the zero-knowledge proof is used to perform at least one of the following:

verifying, based on the first amount encryption parameter, the payer-encrypted transaction amount, and a Pedersen commitment, whether the transaction amount in the reporting information is greater than or equal to 0 and whether an account balance at a payer address is greater than or equal to the transaction amount;

verifying, based on the payer public key and the signed payer address, whether the payer location information is correct;

verifying, based on the payee public key and the signed payee address, whether the payee location information is correct; or

verifying, based on the first supervision public key, the second supervision public key, the third supervision public key, and the one or more second transaction-supervision ciphertext, whether one or more pieces of reporting information respectively corresponding to the one or more second transaction-supervision ciphertext is identical, to verify whether the one or more second transaction-supervision ciphertext is correct.

In a first example, the Pedersen commitment means being verifiable or being equal or not, that is, both the payer client node and the payee client node encrypt the transaction amount, so that the blockchain verification node can verify whether funds are illegally created or destroyed in the transaction. Based on the above example, it is determined that whether $g^{100} \times h^{s2} = g^{info[6]} \times h^{info[5]}$ and info[6] >= 0 are valid, that is, whether the payee-encrypted transaction amount $g^{100} \times h^{s2}$ is equal to the payer-encrypted transaction amount $g^{100} \times h^{s1}$, and whether a seventh vector in the reporting information is greater than or equal to 0. The payee-encrypted transaction amount $g^{100} \times h^{s2}$ is obtained by encrypting the transaction amount 100 based on the Pedersen commitment using s2 as the confusion factor. The payer-encrypted transaction amount $g^{100} \times h^{s1}$ is obtained by encrypting the seventh vector (100) in the reporting information based on the Pedersen commitment using a sixth vector (sl) in the reporting information as the confusion factor. By proving that the two encrypted transaction amounts are equal, it is verified that the transaction amount in the reporting information is greater than or equal to 0, and that the account balance at the payer address is greater than or equal to the transaction amount.

In a second example, the payer public key corresponding to the payer location information is retrieved in the KYC contract. If the payer public key corresponding to the payer location information can decrypt the signed payer address, the payer location information is verified as correct. Based on the above example, an available verification equation is expressed as: checksig(KYC_info[0][info[0]], address$_1$, info[3])=True, where KYC_info[0][info[0]] represents the payer public key corresponding to the payer location information in the KYC contract, address$_1$ represents the encrypted payer address, and info[3] represents the signed payer address. Based on the verification equation, the signed payer address can be decrypted according to the payer public key corresponding to the payer location information in the reporting information. If the encrypted payer address can be obtained, the payer location information is verified as correct.

In a third example, the payee public key corresponding to the payee location information is retrieved in the KYC contract. If the payee public key corresponding to the payee location information can decrypt the signed payee address, the payee location information is verified as correct. Based on the above example, an available verification equation is expressed as: checksig(KYC_info[0][info[1]], address$_2$, info[4])=True, where KYC_info[0][info[1]] represents the payee public key corresponding to the payee location information in the KYC contract, address$_2$ represents the encrypted payee address, and info[4] represents the signed payee address. Based on the verification equation, the signed payee address can be decrypted according to the payee public key corresponding to the payee location information in the reporting information . If the encrypted payee address can be obtained, the payee location information is verified as correct.

In a fourth example, the first supervision public key corresponding to the payer location information, the second supervision public key corresponding to the payee location information, and the third supervision public key corresponding to the digital-currency contract-address location information are retrieved in the KYC contract, the reporting information is encrypted to obtain three pieces of second transaction-supervision ciphertext. In this way, it is verified whether the reporting information corresponding to the one or more pieces of second transaction supervision ciphertext is identical and whether each of the one or more pieces of second transaction supervision ciphertext is correct. Based on the above example, the one or more pieces of second transaction supervision ciphertext includes:

$$\text{metadata}[0]=\text{Enc}(\text{KYC\_info}[1][\text{KYC\_info}[0][\text{info}[0]]], \text{info}),$$

$$\text{metadata}[1]=\text{Enc}(\text{KYC\_info}[1][\text{KYC\_info}[0][\text{info}[1]]], \text{info}),$$

and

$$\text{metadata}[2]=\text{Enc}(\text{KYC\_info}[3][ \text{KYC\_info}[2][\text{info}[2]]], \text{info}).$$

The first supervision public key, the second supervision public key, and the third supervision public key are retrieved based on the payer location information, the payee location information and the digital-currency contract-address location information in the reporting information, to verify whether the reporting information is consistent with each of the one or more pieces of second transaction-supervision ciphertext. In a case that each of the one or more pieces of second transaction-supervision ciphertext is consistent with the reporting information, that is, the reporting information is correct, it is determined whether three pieces of reporting information respectively corresponding to the three pieces of second transaction supervision ciphertext are identical. In a case that the three pieces of reporting information are identical, the verification is passed.

It should be understood that the zero-knowledge proof constructed by the payer client node has a public input and a private input. The public input includes the second transaction ciphertext, contract information associated with the reporting information in the KYC contract, and one or more pieces of second transaction-supervision ciphertext. The private input includes the reporting information. It can be verified whether the reporting information is correct and complete by comparing the information of the public input and the private input.

Thus, based on the zero-knowledge proof and the Pedersen commitment, the blockchain verification node can verify the correctness and completeness of the second transaction ciphertext and one or more pieces of second transaction-supervision ciphertext without transaction plaintext. Transaction-related information stored on the blockchain is immutable, thereby improving the correctness and completeness of the transaction-related information stored on the blockchain and saving storage resources on the blockchain.

In step 304, a blockchain verification node stores the second transaction ciphertext and the one or more pieces of second transaction-supervision ciphertext onto the blockchain in a case that the zero-knowledge proof is valid based on the second transaction ciphertext, the KYC contract, and the one or more pieces of second transaction-supervision ciphertext.

In some embodiments of the present disclosure, the blockchain verification node is a node on the blockchain that verifies on-chain data information. Data information that passes verification may be stored on the blockchain.

In some embodiments of the present disclosure, the blockchain verification node, based on a verification target of the zero-knowledge proof, presets a verification program and inputs the second transaction ciphertext, the KYC contract, and the one or more pieces of second transaction-supervision ciphertext into the preset verification program, thereby determining whether the zero-knowledge proof is valid.

In some embodiments of the present disclosure, after storing the one or more pieces of second transaction-supervision ciphertext onto the blockchain, the second transaction ciphertext and the one or more pieces of second transaction-supervision ciphertext can be viewed, but only the payer, the payee, or the associated supervision parties related to the transaction can decrypt the second transaction-supervision ciphertext to obtain the transaction plaintext.

In step 305, each of the one or more associated supervision nodes obtains the one or more pieces of second transaction-supervision ciphertext from the blockchain, and decrypts the one or more second pieces of transaction-supervision ciphertext based on a supervision private key to obtain and supervise the reporting information.

In some embodiments of the present disclosure, the associated supervision nodes obtain the one or more pieces of second transaction-supervision ciphertext from the blockchain according to a preset period, where the one or more pieces of second transaction-supervision correspond to a same transaction. A supervision private key corresponding to an associated supervision node may decrypt the second transaction-supervision ciphertext. A supervision private key corresponding to an associated supervision node can only decrypt a piece of second transaction-supervision ciphertext encrypted by a supervision public key with which the supervision private key can form a key pair. Therefore, the transaction corresponding to the reporting information obtained by performing decryption based on the supervision private key definitely involves the associated supervision node.

In some embodiments of the present disclosure, if an associated supervision node is used to supervise reporting information of payer information involved in the second transaction ciphertext, the supervising the reporting information includes: extracting the payer information (the payer location information and the signed payer address) from the reporting information, obtaining the payer public key corresponding to the payer location information in the KYC contract, and verifying whether the signed payer address is real and valid based on the payer public key to confirm the payer identity.

In some embodiments of the present disclosure, if an associated supervision node is used to supervise payee information involved in the second transaction ciphertext, the supervising the reporting information includes: extracting the payee information (the payee location information and the signed payee address) from the reporting information, obtaining the payee public key corresponding to the payee location information in the KYC contract, and verifying whether the signed payee address is real and valid based on the payee public key to confirm the payee identity.

In some embodiments of the present disclosure, if an associated supervision node is used to supervise digital-currency information involved in the second transaction ciphertext, the supervising the reporting information includes: extracting the digital-currency information (the digital-currency contract-address location information, an amount encryption contract, and the first amount encryption parameter) from the reporting information, obtaining the amount encryption contract corresponding to the digital-currency contract-address location information in the KYC contract, and verifying whether the type of digital currency to which the transaction amount belongs is real and valid based on the amount encryption contract to confirm the type of digital currency.

In some embodiments, in a case that the reporting information passes verification, the associated supervision nodes sign the second transaction ciphertext contained in the reporting information and send the signed second transaction ciphertext to the blockchain. The receipt of the signed second transaction ciphertext send by each of the one or more associated supervision nodes indicates that the transaction has successfully passed the supervision of the associated supervision nodes.

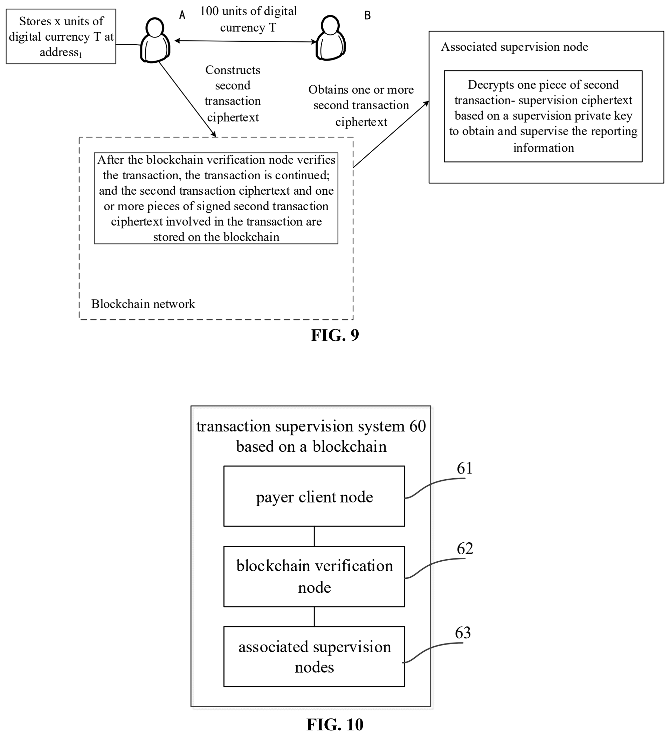

For example, as shown in FIG. 9, a payer client node A constructs a transaction from an encrypted payer address $address_1$ storing digital currency T to an encrypted payee address $address_2$ of a payee client node B. It is assumed that the payer client node A stores x units of digital currency T at $address_1$, s1 represents the first amount encryption parameter, s2 represents the second amount encryption parameter, and the transaction amount is 100. The transaction is sent to the blockchain. After the blockchain verification node verifies the transaction, the transaction is continued. The second transaction ciphertext and one or more signed second transaction ciphertext involved in the transaction are stored on the blockchain. The associated supervision nodes obtain the one or more pieces of second transaction ciphertext from the blockchain and decrypt the one or more pieces of second transaction-supervision ciphertext based on the supervision private keys to obtain and supervise the reporting information.

Thus, the second transaction ciphertext is generated by the payer client node, enhancing the confidentiality of transaction information and the protection of private information in transaction information stored on the blockchain. It is verified whether the reporting information used in encrypting the one or more pieces of second transaction-supervision ciphertext is correct and complete based on the KYC contract and the zero-knowledge proof, enhancing the correctness and completeness of the one or more pieces of second transaction-supervision ciphertext supervised by the associated supervision nodes, and thus addressing the problem of system resource wastage caused by invalid supervision of the associated supervision nodes on the pieces of second transaction-supervision ciphertext. Furthermore, since the one or more pieces of second transaction-supervision ciphertext are obtained by performing encryption based on the supervision public keys corresponding to all associated supervision nodes involved in the transaction, an associated supervision node can obtain corresponding target transaction-supervision information based on its supervision private key, where the target transaction-supervision information is information that can be supervised by the associated supervision node, and the associated supervision node cannot obtain information that is not supervised by it in the reporting information, thereby improving the supervision efficiency of the associated supervision nodes. Further, the related supervision information in the reporting information can only be obtained by a corresponding associated supervision node, rather than other supervision nodes, thereby improving the confidentiality of transaction information.

The solutions of the embodiments of the present disclosure are introduced from the perspective of a system method above. From the perspective of a single-side method, when applied to a payer client node, the method includes:

obtaining, by the payer client node, transaction plaintext of a transaction, and constructing second transaction ciphertext based on the transaction plaintext, where the transaction involves one or more associated supervision nodes;

generating reporting information based on a know your customer (KYC) contract and the second transaction ciphertext, and encrypting the reporting information respectively based on one or more supervision public keys respectively corresponding to the one or more associated supervision nodes in the KYC contract, to obtain one or more pieces of second transaction-supervision ciphertext; and

sending the second transaction ciphertext, the one or more pieces of second transaction-supervision ciphertext, and a zero-knowledge proof to a blockchain, where the zero-knowledge proof is a proof for verifying whether the reporting information is correct and complete, and each of the one or more pieces of second transaction-supervision ciphertext is decrypted and supervised by a corresponding associated supervision node in a case that the zero-knowledge proof is valid.

Thus, the second transaction ciphertext is constructed by the payer client node, enhancing the confidentiality of transaction information and the protection of private information in transaction information stored on the blockchain. It is verified whether the reporting information for encrypting the one or more second pieces of transaction-supervision ciphertext is correct and complete based on the KYC contract and the zero-knowledge proof, enhancing the correctness and completeness of the reporting information supervised by the associated supervision nodes. In this way, during data transmission, the protection of private information of the encrypted reporting information (the one or more pieces of second transaction-supervision ciphertext) can be improved, and the accuracy of the reporting information obtained by the associated supervision nodes can be improved.

From the perspective of a single-side method, when applied to each of one or more associated supervision nodes, the method includes:

obtaining one or more pieces of second transaction-supervision ciphertext from a blockchain, where,
the one or more pieces of second transaction-supervision ciphertext are obtained by a payer client node through encrypting reporting information based on one or more supervision public keys respectively corresponding to the one or more associated supervision nodes in a know your customer (KYC) contract, the reporting information being generated based on the KYC contract and second transaction ciphertext, the second transaction ciphertext information being generated based on transaction plaintext, and a transaction involving the one or more associated supervision nodes; and
decrypting a corresponding piece of second transaction-supervision ciphertext based on a supervision private key of the associated supervision node, to obtain and supervise the reporting information.

Thus, since the one or more pieces of second transaction-supervision ciphertext are obtained by encryption based on the supervision public keys respectively corresponding to all associated supervision nodes involved in the transaction, the associated supervision nodes can decrypt their corresponding pieces of second transaction-supervision ciphertext based on their respective supervision private keys, and the reporting information includes information required to be supervised in the associated supervision information, thereby improving the supervision efficiency of the associated supervision nodes. Moreover, the reporting information can only be obtained by the corresponding associated supervision nodes, rather than other non-associated supervision nodes, thereby improving the confidentiality of information related to the transaction.

It can be understood that in order to implement the above functions, a transaction supervision apparatus based on a blockchain includes at least one of corresponding hardware structures and software modules required to implement the functions. Those skilled in the art should easily realize that the present disclosure can be implemented in the form of hardware or a combination of hardware and computer software in combination with the units and algorithmic steps of the various examples described in the embodiments provided herein. Whether a function is to be performed by hardware or by hardware driven by computer software depends on a specific application and design constraints of the technical solution. A person skilled in the art can use different methods to implement the described functions for each particular application, but it is not to be considered that the implementation goes beyond the scope of the embodiments of the present disclosure.

In the embodiments of the present disclosure, the transaction supervision apparatus based on a blockchain may be divided into functional units based on the above method examples. For example, the functional units are divided according to functions, or two or more functions may be integrated into a processing unit. Integration of the units may be implemented by hardware or in a form of a software functional unit. It should be noted that the division of units in the embodiments of the present disclosure is schematic, which is only a logical function division, and the division may be in other forms in actual implementation.

FIG. 10 is a structural block diagram of a transaction supervision system based on a blockchain according to an embodiment of the present disclosure. As shown in FIG. 10, the transaction supervision system 60 based on a blockchain according to the embodiment of the present disclosure includes a payer client node 61, a blockchain verification node 62, and one or more associated supervision nodes 63.

The payer client node 61 is configured to:

obtain transaction plaintext of a transaction, where the transaction plaintext includes payee identity information, a transaction amount, and payer identity information;

receive an encrypted payee address and a first amount encryption parameter sent by a payee client node;

generate a random symmetric key, and construct first transaction ciphertext based on the random symmetric key, where the first transaction ciphertext includes an encrypted payer address, an encrypted payment amount, the encrypted payee address, and first transaction-supervision ciphertext, where

the first transaction-supervision ciphertext includes encrypted supervision information and one or more encrypted symmetric keys, the encrypted supervision information being obtained by encrypting the transaction plaintext based on the random symmetric key; and the one or more encrypted symmetric keys including: one or more keys obtained by respectively encrypting the random symmetric key based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount; and

send the first transaction ciphertext and a zero-knowledge proof to the blockchain, where the zero-knowledge proof is a proof that verifies whether the first transaction ciphertext is correct and complete.

The blockchain verification node 62 is configured to store the first transaction ciphertext onto the blockchain in a case that the zero-knowledge proof is valid, and update a current account balance at the encrypted payer address and a current account balance at the encrypted payee address based on the first transaction ciphertext.

The one or more associated supervision nodes 63 are configured to obtain the first transaction ciphertext from the blockchain, perform decryption based on respective supervision private keys to obtain the random symmetric key, and perform decryption based on the random symmetric key to obtain the transaction plaintext for supervision and verification.

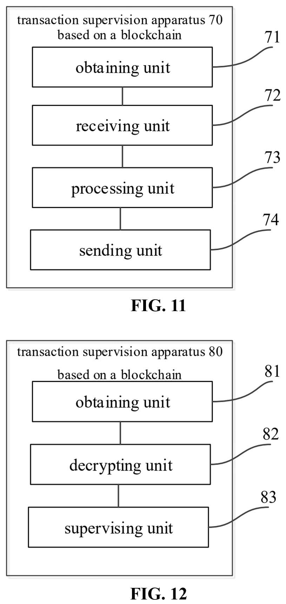

FIG. 11 is a structural diagram of a transaction supervision apparatus based on a blockchain according to an embodiment of the present disclosure. As shown in FIG. 11, the transaction supervision apparatus 70 based on a blockchain according to the embodiment of the present disclosure is applied to a payer client node. The apparatus includes an obtaining unit 71, a receiving unit 72, a processing unit 73, and a sending unit 74.

The obtaining unit 71 is configured to obtain transaction plaintext of a transaction, where the transaction plaintext includes payee identity information, a transaction amount, and payer identity information.

The receiving unit 72 is configured to receive an encrypted payee address and a first amount encryption parameter sent by a payee client node.

The processing unit 73 is configured to generate a random symmetric key, and construct first transaction ciphertext based on the random symmetric key, where the first transaction ciphertext includes an encrypted payer address, an encrypted payment amount, the encrypted payee address, and first transaction supervision-ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by respectively encrypting the random symmetric key respectively based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount.

The sending unit 74 is configured to send the first transaction ciphertext and a zero-knowledge proof to the blockchain, where the zero-knowledge proof is a proof for verifying whether the first transaction-ciphertext is correct and complete.

FIG. 12 is a structural diagram of a transaction supervision apparatus based on a blockchain according to another embodiment of the present disclosure. As shown in FIG. 12, the transaction supervision apparatus 80 based on a blockchain according to the embodiment of the present disclosure is applied to each of one or more associated supervision nodes. The apparatus includes an obtaining unit 81, a decrypting unit 82, and a supervising unit 83.

The obtaining unit 81 is configured to obtain first transaction ciphertext from the blockchain.

The decrypting unit 82 is configured to perform decryption based on a supervision private key to obtain a random symmetric key.

The supervising unit 83 is configured to perform decryption based on the random symmetric key to obtain transaction plaintext for supervision and verification.

The first transaction ciphertext includes an encrypted payer address, an encrypted payment amount, an encrypted payee address, and first transaction supervision-ciphertext, where

the first transaction-supervision ciphertext includes encrypted supervision information and one or more encrypted symmetric keys, the encrypted supervision information being obtained by encrypting the transaction plaintext based on the random symmetric key, and the one or more encrypted symmetric keys including: one or more keys obtained by encrypting the random symmetric key based on one or more supervision public keys respectively corresponding to the one or more associated supervision nodes involved in a transaction, and

the encrypted payment amount is obtained by encrypting a transaction amount based on a first amount encryption parameter and a second amount encryption parameter, the first amount encryption parameter being a parameter used by a payee client node to encrypt the transaction amount, and the second amount encryption parameter being a parameter used by a payer client node to encrypt the transaction amount.

The transaction plaintext information includes payee identity information, the transaction amount, and payer identity information.

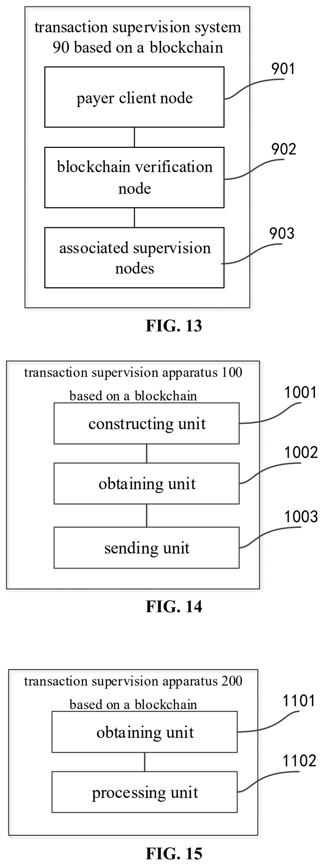

FIG. 13 is a structural block diagram of a transaction supervision system based on a blockchain according to another embodiment of the present disclosure. As shown in FIG. 13, the transaction supervision system 90 based on a blockchain according to the embodiment of the present disclosure includes a payer client node 901, a blockchain verification node 902, and one or more associated supervision nodes 903.

The payer client node 901 is configured to:

obtain transaction plaintext of a transaction, and constructing second transaction ciphertext based on the transaction plaintext, where the transaction involves one or more associated supervision nodes;

generate reporting information based on a know your customer (KYC) contract and the second transaction ciphertext, and encrypt the reporting information respectively based on one or more supervision public keys respectively corresponding to the one or more associated supervision nodes in the KYC contract, to obtain one or more pieces of second transaction-supervision ciphertext; and

send the second transaction ciphertext, the one or more pieces of second transaction-supervision ciphertext, and a zero-knowledge proof to the blockchain, where the zero-knowledge proof is a proof for verifying whether the reporting information is correct and complete.

The blockchain verification node 902 is configured to:
store the second transaction ciphertext and the one or more pieces of second transaction-supervision ciphertext onto the blockchain in a case that the zero-knowledge proof is valid based on the second transaction ciphertext, the KYC contract, and the one or more pieces of second transaction-supervision ciphertext.

Each of the one of the one or more associated supervision nodes 903 is configured to:

obtain a corresponding pieces of second transaction-supervision ciphertext from the blockchain, where the one or more pieces of second transaction-supervision ciphertext are obtained by a payer client node through encrypting the reporting information respectively based on one or more supervision public keys respectively corresponding to the one or more associated supervision nodes in the KYC contract, the reporting information being generated based on the KYC contract and second transaction ciphertext, the second transaction ciphertext being constructed based on the transaction plaintext, and a transaction involving the one or more associated supervision nodes; and

decrypt the corresponding pieces of second transaction-supervision ciphertext based on a supervision private key, to obtain and supervise the reporting information.

FIG. 14 is a structural diagram of a transaction supervision apparatus based on a blockchain according to another embodiment of the present disclosure. As shown in FIG. 14, the transaction supervision apparatus 100 based on a blockchain according to the embodiment of the present disclosure is applied to a payer client node. The apparatus includes a constructing unit 1001, an obtaining unit 1002, and a sending unit 1003.

The constructing unit 1001 is configured to obtain transaction plaintext of a transaction, and construct second transaction ciphertext based on the transaction plaintext, where the transaction involves one or more associated supervision nodes.

The obtaining unit 1002 is configured to generate reporting information based on a know your customer (KYC) contract and the second transaction ciphertext, and encrypt the reporting information respectively based on one or more supervision public keys respectively corresponding to the one or more associated supervision nodes in the KYC contract, to obtain one or more pieces of second transaction-supervision ciphertext.

The sending unit 1003 is configured to send the second transaction ciphertext, the one or more pieces of second transaction-supervision ciphertext, and a zero-knowledge proof to the blockchain, where the zero-knowledge proof is a proof for verifying whether the reporting information is correct and complete, such that each of the one or more pieces of second transaction-supervision ciphertext is decrypted and supervised by a corresponding associated supervision node in a case that the zero-knowledge proof is valid.

In some embodiments, in the transaction supervision apparatus based on a blockchain, the transaction plaintext includes payee identity information, a transaction amount, and payer identity information, and the second transaction ciphertext includes an encrypted payer address, a payee-encrypted transaction amount, an encrypted payee address, and a payer-encrypted transaction amount.

In some embodiments, in the transaction supervision apparatus based on a blockchain, an element of a vector matrix in the KYC contract includes a user-identity vector, a supervision-identity vector, and a public-key vector, where the user-identity vector stores the payee identity information and the payer identity information; the supervision-identity vector stores identity information of the one or more associated supervision nodes; and the public-key vector stores a payee public key, a payer public key, and the one or more supervision public keys.

In some embodiments, the obtaining unit 1002 is configured to:

sign, by the payer client node, the encrypted payer address based on a payer private key to obtain a signed payer address;

obtain, by the payer client node, a signed payee address corresponding to the encrypted payee address, where the signed payee address is obtained by signing the encrypted payee address based on a payee private key; and

merge, by the payer client node, payer location information, payer location information, payee location information, digital-currency contract-address location information, the signed payer address, the signed payee address, a first amount encryption parameter, and the transaction amount, to generate the reporting information, where

the payer location information indicates location information of the payer public key corresponding to the payer client node in the KYC contract;

the payee location information indicates location information of the payee public key corresponding to a payee client node in the KYC contract, the payee client node being a client node corresponding to a payee of the transaction;

the digital-currency contract-address location information indicates location information of a digital-currency management node corresponding to a type of digital currency to which the transaction amount belongs in the KYC contract; and

the first amount encryption parameter is a parameter used to encrypt the transaction amount to obtain the payer-encrypted transaction amount.

In some embodiments, in the transaction supervision apparatus based on a blockchain, the one or more supervision public keys include a first supervision public key, a second supervision public key, and a third supervision public key, where an associated supervision node, corresponding to the first supervision public key, is configured to supervise the payer client node; an associated supervision node, corresponding to the second supervision public key, is configured to supervise the payee client node; and an associated supervision node, corresponding to the third supervision public key, is configured to supervise the type of digital currency to which the transaction amount belongs. The obtaining unit 1002 is configured to: encrypt, by the payer client node, the reporting information respectively based on the first supervision public key, the second supervision public key, and the third supervision public key, to obtain the one or more pieces of second transaction-supervision ciphertext, where the first supervision public key is a supervision public key corresponding to the payer location information in the KYC contract; the second supervision public key is a supervision public key corresponding to the payee location information in the KYC contract; and the third supervision public key is a supervision public key corresponding to the digital-currency contract-address location information in the KYC contract.

In some embodiments, in the transaction supervision apparatus based on a blockchain, the zero-knowledge proof is used for performing at least one of the following:

verifying, based on the first amount encryption parameter, the transaction amount, and a Pedersen commitment, whether the transaction amount in the reporting information is greater than or equal to 0 and whether an account balance at a payer address is greater than or equal to the transaction amount;

verifying, based on the payer public key and the signed payer address, whether the payer location information is correct;

verifying, based on the payee public key and the signed payee address, whether the payee location information is correct; or

verifying, based on the first supervision public key, the second supervision public key, the third supervision public key, and the one or more pieces of second transaction-supervision ciphertext, whether the one or more pieces of second transaction-supervision ciphertext correspond to same reporting information and whether each of the one or more pieces of second transaction-supervision ciphertext is correct.

In some embodiments, in the transaction supervision apparatus based on a blockchain, the encrypted payee address is obtained by encrypting a payee address based on an asymmetric key-pseudonym algorithm, and the encrypted payer address is obtained by encrypting the payer address based on the asymmetric key-pseudonym algorithm.

In some embodiments, in the transaction supervision apparatus based on a blockchain, an encrypted payment amount is obtained by encrypting the transaction amount based on the Pedersen commitment using the first amount encryption parameter as a confusion factor; and an encrypted payee amount is obtained by encrypting the transaction amount based on the Pedersen commitment using a second amount encryption parameter as a confusion factor.

FIG. 15 is a structural diagram of a transaction supervision apparatus based on a blockchain according to another embodiment of the present disclosure. As shown in FIG. 15, the transaction supervision apparatus 200 based on a blockchain according to the embodiment of the present disclosure is applied to each of one or more associated supervision nodes. The apparatus includes an obtaining unit 1101 and a processing unit 1102.

The obtaining unit 1101 is configured to by each of the one or more associated supervision nodes, a piece of second transaction-supervision ciphertext of one or more pieces of second transaction-supervision ciphertext from the blockchain, where the one or more pieces of second transaction-supervision ciphertext are obtained by a payer client node through encrypting reporting information respectively based on one or more supervision public keys respectively corresponding to the one or more associated supervision nodes in a know your customer (KYC) contract, the reporting information being generated based on the KYC contract and second transaction ciphertext, the second transaction ciphertext being constructed based on transaction plaintext of a transaction, and the transaction involving the one or more associated supervision nodes.

The processing unit 1102 is configured to decrypt the piece of second transaction-supervision ciphertext based on a supervision private key, to obtain and supervise the reporting information.

In some embodiments, in the transaction supervision apparatus based on a blockchain, an element of a vector matrix in the KYC contract includes a user-identity vector, a supervision-identity vector, and a public-key vector, where the user-identity vector stores the payee identity information and the payer identity information; the supervision-identity vector stores identity information of the one or more associated supervision nodes; and the public-key vector stores a payee public key, a payer public key, and the one or more supervision public keys.

In some embodiments, in the transaction supervision apparatus based on a blockchain, the transaction plaintext includes payee identity information, a transaction amount, and payer identity information, and the second transaction ciphertext includes an encrypted payer address, a payee-encrypted transaction amount, an encrypted payee address, and a payer-encrypted transaction amount.

In some embodiments, in the transaction supervision apparatus based on a blockchain, the one or more supervision public keys include a first supervision public key, a second supervision public key, and a third supervision public key, where an associated supervision node, corresponding to the first supervision public key, is configured to supervise the payer client node; an associated supervision node, corresponding to the second supervision public key, is configured to supervise the payee client node; and an associated supervision node, corresponding to the third supervision public key, is configured to supervise the type of digital currency to which the transaction amount belongs.

With regard to the apparatus in the above-mentioned embodiment, the specific mode in which each module performs the operation is described in detail in the embodiments related to the method, which will not be described in detail here.

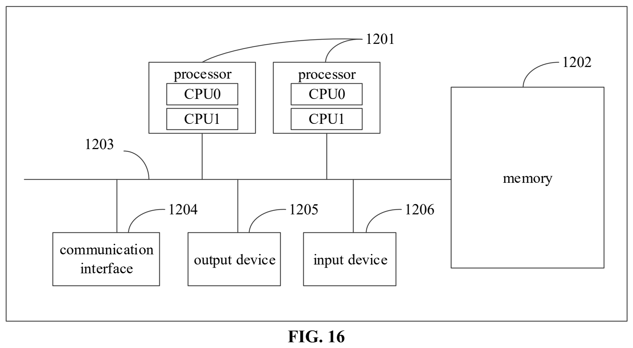

FIG. 16 is a structural diagram of an associated supervision node according to the embodiments of the present disclosure. As shown in FIG. 16, the electronic device may include a processor 1201 and a memory 1202. The memory 1202 is configured to store an executable instruction executed by the processor 1201. The processor 1201 is configured to execute the instruction to perform the transaction supervision method based on a blockchain as described in the embodiments.

The electronic device may further include a communication bus 1203 and at least one communication interface 1204.

The processor 1201 may be a central processing unit (CPU), a micro processing unit, an application specific integrated circuit (ASIC), or one or more integrated circuits for controlling execution of the solutions in the present disclosure.

The communication bus 1203 is a signal pathway, and is configured to transmit information between the aforementioned components.

The communication interface 1204, utilizing any transceiver-type device, is configured to communicate with other devices or communication networks, such as an Ethernet, a radio access network (RAN), a wireless local area network (WLAN), and the like.

The memory 1202 may be a read-only memory (ROM) or other types of static storage devices capable of storing static information and instructions, a random access memory (RAM) or other types of dynamic storage devices capable of storing information and instructions, or an electrically erasable programmable read-only memory (EEPROM), a compact disc read-only memory (CD-ROM) or other optical disc storage, disc storage (including compressed discs, laser discs, discs, digital versatile discs, Blu-ray discs, etc.), a magnetic disk storage medium or other magnetic storage devices, or any other medium that can be configured to carry or store desired program code in the form of instructions or data structures and can be accessed by a computer, without being limited thereto. The memory 1202 may exist independently and be connected to the processor 1201 via the communication bus 1203. The memory 1202 may also be integrated with the processor 1201.

The memory 1202 is configured to store instructions for implementing the solutions of the present disclosure, and instruction execution is controlled by the processor 1201. The processor 1201 is configured to execute programs or instructions stored in the memory 1202, thereby realizing the functions of the methods of the present disclosure.

As an example, referring to FIG. 11, the transaction supervision apparatus based on a blockchain is applied to a payer client node. The apparatus includes an obtaining unit 71, a receiving unit 72, a processing unit 73, and a sending unit 74. The functions implemented by the above units are identical to the function of the processor 1201 in FIG. 16.

As another example, referring to FIG. 12, the transaction supervision apparatus based on a blockchain is applied to the associated supervision nodes. The apparatus includes an obtaining unit 81, a decrypting unit 82, and a supervising unit 83. The functions implemented by the above units are identical to the function of the processor 1201 in FIG. 16.

As another example, referring to FIG. 14, the transaction supervision apparatus based on a blockchain is applied to a payer client node. The apparatus includes a constructing unit 1001, an obtaining unit 1002, and a sending unit 1003. The functions implemented by the above units are identical to the function of the processor 1201 in FIG. 16.

As another example, referring to FIG. 15, the transaction supervision apparatus based on a blockchain is applied to the associated supervision nodes. The apparatus includes an obtaining unit 1101 and a processing unit 1102. The functions implemented by the above units are identical to the function of the processor 1201 in FIG. 16.

In some embodiments of the present disclosure, the processor 1201 may include one or more CPUs, such as CPU0 and CPU1 in FIG. 16.

In some embodiments of the present disclosure, the electronic device may include multiple processors 1201, each of the multiple processors 1201 may be a single-core (single-CPU) processor or a multi-core (multi-CPU) processor. Here, the processor 1201 may refer to one or more devices, circuits, and/or processing cores configured to process data (such as, computer program instructions).

In some embodiments of the present disclosure, the electronic device may further include an output device 1205 and an input device 1206. The output device 1205 communicates with the processor 1201 and can display information in various manners. For example, the output device 1205 may be a liquid crystal display (LCD), a light emitting diode (LED) display device, a cathode ray tube (CRT) display device, or a projector. The input device 1206 communicates with the processor 1201 and can receive user input in various manners. For example, the input device 1206 may be a mouse, a keyboard, a touchscreen device, or a sensing device.

Those skilled in the art may understand that the structure shown in FIG. 16 does not constitute a limitation on the electronic device, and the electronic device may include more or fewer components than those shown in the figure, or some components may be combined, or a different component deployment may be used. The electronic device in FIG. 16 may be a server, a client, or another device.

Additionally, a computer-readable storage medium (such as a non-transitory computer-readable storage medium) is provided in the present disclosure. The computer-readable storage medium stores a program or an instruction. The instruction in the computer-readable storage medium is executed by the processor to cause the electronic device to perform the transaction supervision method based on a blockchain as provided in the aforementioned embodiments. In some embodiments, the computer-readable storage medium may be a ROM, a random access memory (RAM), a CD-ROM, a magnetic tape, a floppy disk, or an optical data storage device.

Additionally, a computer program product is provided in the present disclosure, including a computer program or an instruction. The computer program product is stored in a non-volatile readable storage medium. The computer program product is executed by at least one processor to cause the electronic device to perform the transaction supervision method based on a blockchain as provided in the aforementioned embodiments.

Other embodiments of the present disclosure will be apparent to those skilled in the art from consideration of the specification and practice of the disclosure here. The present disclosure is intended to cover any variation, application, or adapted modification of the present disclosure. Such variation, application, or adapted modification follow the general principles of the present disclosure and include common knowledge or common technical means in the art which are not disclosed in the present disclosure. The specification and the embodiments are only illustrative, and the actual scope and spirit of the present disclosure are defined by the claims.

It should be noted that the present disclosure is not limited to the precise structure described above and shown in the drawings. Various modifications and changes may be made without departing from the scope of the present disclosure. The scope of the present disclosure is limited by only the claims.

**Claims**

1. A transaction supervision method based on a blockchain, comprising:

    by a payer client node, obtaining transaction plaintext of a transaction, wherein the transaction plaintext comprises payee identity information, a transaction amount, and payer identity information;
    receiving, by the payer client node, an encrypted payee address and a first amount encryption parameter sent by a payee client node;
    generating, by the payer client node, a random symmetric key, and constructing, by the payer client node, first transaction ciphertext based on the random symmetric key, wherein the first transaction ciphertext comprises an encrypted payer address, an encrypted payment amount, the encrypted payee address, and first transaction-supervision ciphertext, wherein

       the first transaction-supervision ciphertext comprises encrypted supervision information and one or more encrypted symmetric keys, the encrypted supervision information being obtained by encrypting the transaction plaintext based on the random symmetric key, and the one or more encrypted symmetric keys comprising: one or more keys obtained by encrypting the random symmetric key respectively based on one or more supervision public keys respectively corresponding to one or more associated supervision nodes involved in the transaction, and
       the encrypted payment amount is obtained by encrypting the transaction amount based on the first amount encryption parameter and a second amount encryption parameter, the second amount encryption parameter being a parameter used by the payer client node to encrypt the transaction amount;

    sending, by the payer client node, the first transaction ciphertext and a zero-knowledge proof to the blockchain, wherein the zero-knowledge proof is a proof for verifying whether the first transaction ciphertext is correct and complete;
    storing, by a blockchain verification node, the first transaction ciphertext onto the blockchain in a case that the zero-knowledge proof is valid, and updating, by the blockchain verification node, a current account balance at the encrypted payer address and a current account balance at the encrypted payee address based on the first transaction ciphertext; and
    by each of the one or more associated supervision nodes, obtaining the first transaction ciphertext from the blockchain, performing decryption based on a supervision private key to obtain the random symmetric key, and performing decryption based on the random symmetric key to obtain the transaction plaintext for supervision and verification.

2. The transaction supervision method according to claim 1, wherein the one or more supervision public keys respectively corresponding to the one or more associated supervision nodes are stored in a know your customer (KYC) contract, and an element of a vector matrix in the KYC contract comprises a user-identity vector, a supervision-identity vector, and a public-key vector, wherein the user-identity vector stores the payee identity information and the payer identity information, the supervision-identity vector stores identity information of the one or more associated supervision nodes, and the public-key vector stores a payee public key, a payer public key, and the one or more supervision public keys.

3. The transaction supervision method according to claim 1 or 2, wherein any one of the one or more associated supervision nodes has an authority to supervise at least one of the following supervised objects related to the transaction: a payer client, a payee client, and a type of digital currency to which the transaction amount belongs.

4. The transaction supervision method according to any one of claims 1 to 3, wherein after performing decryption, by each of the one or more associated supervision nodes, based on the random symmetric key to obtain the transaction plaintext for supervision and verification, the transaction supervision method further comprises:

signing, by each of the one or more associated supervision nodes, the first transaction ciphertext based on the supervision private key to obtain signed ciphertext in a case that the transaction plaintext is correct and complete; and

sending, by each of the one or more associated supervision nodes, the signed ciphertext to the payer client node.

5. The transaction supervision method according to any one of claims 1 to 4, wherein the first transaction ciphertext further comprises an expected account balance, the expected account balance being a remaining amount after the transaction amount is paid from the encrypted payer address.

6. The transaction supervision method according to any one of claims 1 to 5, wherein the zero-knowledge proof is used for performing at least one of the following:

verifying, based on the first amount encryption parameter, the second amount encryption parameter, and a Pedersen commitment, whether the transaction amount is greater than or equal to 0 and whether the current account balance at the encrypted payer address is greater than or equal to the transaction amount; or

verifying, based on the one or more supervision public keys and the first transaction-supervision ciphertext, whether the first transaction ciphertext is correct.

7. The transaction supervision method according to any one of claims 1 to 6, wherein the encrypted payee address is obtained by encrypting a payee address based on an asymmetric key-pseudonym algorithm; and the encrypted payer address is obtained by encrypting a payer address based on the asymmetric key-pseudonym algorithm.

8. A transaction supervision method based on a blockchain, applied to a payer client node, comprising:

obtaining transaction plaintext of a transaction, wherein the transaction plaintext comprises payee identity information, a transaction amount, and payer identity information;

receiving an encrypted payee address and a first amount encryption parameter sent by a payee client node;

generating a random symmetric key, and constructing first transaction ciphertext based on the random symmetric key, wherein the first transaction ciphertext comprises an encrypted payer address, an encrypted payment amount, the encrypted payee address, and first transaction supervision-ciphertext, wherein

the first transaction-supervision ciphertext comprises encrypted supervision information and one or more encrypted symmetric keys, the encrypted supervision information being obtained by encrypting the transaction plaintext based on the random symmetric key, and the one or more encrypted symmetric keys comprising: one or more keys obtained by respectively encrypting the random symmetric key respectively based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount; and

sending the first transaction ciphertext and a zero-knowledge proof to the blockchain, wherein the zero-knowledge proof is a proof for verifying whether the first transaction-ciphertext is correct and complete.

9. A transaction supervision method based on a blockchain, applied to each of one or more associated supervision nodes, comprising:

obtaining first transaction ciphertext from the blockchain;
performing decryption based on a supervision private key to obtain a random symmetric key; and
performing decryption based on the random symmetric key to obtain transaction plaintext for supervision and verification, wherein

the first transaction ciphertext comprises an encrypted payer address, an encrypted payment amount, an encrypted payee address, and first transaction supervision-ciphertext, wherein

the first transaction-supervision ciphertext comprises encrypted supervision information and one or more encrypted symmetric keys, the encrypted supervision information being obtained by encrypting the transaction plaintext based on the random symmetric key, and the one or more encrypted symmetric keys comprising: one or more keys obtained by encrypting the random symmetric key based on one or more supervision public keys respectively corresponding to the one or more associated supervision nodes involved in a transaction, and
the encrypted payment amount is obtained by encrypting a transaction amount based on a first amount encryption parameter and a second amount encryption parameter, the first amount encryption parameter being a parameter used by a payee client node to encrypt the transaction amount, and the second amount encryption parameter being a parameter used by a payer client node to encrypt the transaction amount; and

the transaction plaintext comprises payee identity information, the transaction amount, and payer identity information.

10. A transaction supervision method based on a blockchain, comprising:

by a payer client node, obtaining transaction plaintext of a transaction, and constructing second transaction ciphertext based on the transaction plaintext, wherein the transaction involves one or more associated supervision nodes;
by the payer client node, generating reporting information based on a know your customer (KYC) contract and the second transaction ciphertext, and encrypting the reporting information respectively based on one or more supervision public keys respectively corresponding to the one or more associated supervision nodes in the KYC contract, to obtain one or more pieces of second transaction-supervision ciphertext;
sending, by the payer client node, the second transaction ciphertext, the one or more pieces of second transaction-supervision ciphertext, and a zero-knowledge proof to the blockchain, wherein the zero-knowledge proof is a proof for verifying whether the reporting information is correct and complete;
storing, by a blockchain verification node, the second transaction ciphertext and the one or more pieces of second transaction-supervision ciphertext onto the blockchain in a case that the zero-knowledge proof is valid based on the second transaction ciphertext, the KYC contract, and the one or more pieces of second transaction-supervision ciphertext; and
obtaining, by each of the one of the one or more associated supervision nodes, a corresponding pieces of second transaction-supervision ciphertext from the blockchain, and decrypting the corresponding pieces of second transaction-supervision ciphertext based on a supervision private key, to obtain and supervise the reporting information.

11. The transaction supervision method according to claim 10, wherein the transaction plaintext comprises payee identity information, a transaction amount, and payer identity information, and the second transaction ciphertext comprises an encrypted payer address, a payee-encrypted transaction amount, an encrypted payee address, and a payer-encrypted transaction amount.

12. The transaction supervision method according to claim 10 or 11, wherein an element of a vector matrix in the KYC contract comprises a user-identity vector, a supervision-identity vector, and a public-key vector, wherein the user-identity vector stores the payee identity information and the payer identity information; the supervision-identity vector stores identity information of the one or more associated supervision nodes; and the public-key vector stores a payee public key, a payer public key, and the one or more supervision public keys.

13. The transaction supervision method according to any one of claims 10 to 12, wherein generating, by the payer client node, reporting information based on a KYC contract and the second transaction ciphertext comprises:

signing, by the payer client node, the encrypted payer address based on a payer private key to obtain a signed payer address;

obtaining, by the payer client node, a signed payee address corresponding to the encrypted payee address, wherein the signed payee address is obtained by signing the encrypted payee address based on a payee private key; and

merging, by the payer client node, payer location information, payee location information, digital-currency contract-address location information, the signed payer address, the signed payee address, a first amount encryption parameter, and the transaction amount, to generate the reporting information, wherein

the payer location information indicates location information of the payer public key corresponding to the payer client node in the KYC contract;

the payee location information indicates location information of the payee public key corresponding to a payee client node in the KYC contract, the payee client node being a client node corresponding to a payee of the transaction;

the digital-currency contract-address location information indicates location information of a digital-currency management node corresponding to a type of digital currency to which the transaction amount belongs in the KYC contract; and

the first amount encryption parameter is a parameter used to encrypt the transaction amount to obtain the payer-encrypted transaction amount.

14. The transaction supervision method according to any one of claims 10 to 13, wherein the one or more supervision public keys comprise a first supervision public key, a second supervision public key, and a third supervision public key, wherein

an associated supervision node, corresponding to the first supervision public key, has an authority to supervise a payer client of supervised objects related to the transaction; an associated supervision node, corresponding to the second supervision public key, has an authority to supervise a payee client of the supervised objects related to the transaction; and an associated supervision node, corresponding to the third supervision public key, has an authority to supervise the type of digital currency, to which the transaction amount belongs, of the supervised objects related to the transaction,

and wherein the encrypting, by the payer client node, the reporting information respectively based on one or more supervision public keys respectively corresponding to the one or more associated supervision nodes in the KYC contract to obtain one or more pieces of second transaction-supervision ciphertext comprises:

encrypting, by the payer client node, the reporting information respectively based on the first supervision public key, the second supervision public key, and the third supervision public key, to obtain the one or more pieces of second transaction-supervision ciphertext, wherein

the first supervision public key is a supervision public key corresponding to the payer location information in the KYC contract;

the second supervision public key is a supervision public key corresponding to the payee location information in the KYC contract; and

the third supervision public key is a supervision public key corresponding to the digital-currency contract-address location information in the KYC contract.

15. The transaction supervision method according to any one of claims 10 to 14, wherein the zero-knowledge proof is used for performing at least one of the following:

verifying, based on the first amount encryption parameter, the transaction amount, and a Pedersen commitment, whether the transaction amount in the reporting information is greater than or equal to 0 and whether an account balance at a payer address is greater than or equal to the transaction amount;

verifying, based on the payer public key and the signed payer address, whether the payer location information is correct;

verifying, based on the payee public key and the signed payee address, whether the payee location information is correct; or

verifying, based on the first supervision public key, the second supervision public key, the third supervision public key, and the one or more pieces of second transaction-supervision ciphertext, whether the one or more pieces of second transaction-supervision ciphertext correspond to same reporting information and whether each of the one or more pieces of second transaction-supervision ciphertext is correct.

16. The transaction supervision method according to any one of claims 11 to 15, wherein the encrypted payee address is obtained by encrypting a payee address based on an asymmetric key-pseudonym algorithm, and the encrypted payer address is obtained by encrypting the payer address based on the asymmetric key-pseudonym algorithm.

17. The transaction supervision method according to any one of claims 11 to 15, wherein

an encrypted payment amount is obtained by encrypting the transaction amount based on the Pedersen commitment using the first amount encryption parameter as a confusion factor; and
an encrypted payee amount is obtained by encrypting the transaction amount based on the Pedersen commitment using a second amount encryption parameter as a confusion factor.

18. A transaction supervision method based on a blockchain, applied to a payer client node, comprising:

by the payer client node, obtaining transaction plaintext of a transaction, and constructing second transaction ciphertext based on the transaction plaintext, wherein the transaction involves one or more associated supervision nodes;
generating reporting information based on a know your customer (KYC) contract and the second transaction ciphertext, and encrypting the reporting information respectively based on one or more supervision public keys respectively corresponding to the one or more associated supervision nodes in the KYC contract, to obtain one or more pieces of second transaction-supervision ciphertext; and
sending the second transaction ciphertext, the one or more pieces of second transaction-supervision ciphertext, and a zero-knowledge proof to the blockchain, wherein the zero-knowledge proof is a proof for verifying whether the reporting information is correct and complete, such that each of the one or more pieces of second transaction-supervision ciphertext is decrypted and supervised by a corresponding associated supervision node in a case that the zero-knowledge proof is valid.

19. A transaction supervision method based on a blockchain, applied to each of one or more associated supervision nodes, comprising:

obtaining a piece of second transaction-supervision ciphertext of one or more pieces of second transaction-supervision ciphertext from the blockchain, wherein
the one or more pieces of second transaction-supervision ciphertext are obtained by a payer client node through encrypting reporting information respectively based on one or more supervision public keys respectively corresponding to the one or more associated supervision nodes in a know your customer (KYC) contract, the reporting information being generated based on the KYC contract and second transaction ciphertext, the second transaction ciphertext being constructed based on transaction plaintext of a transaction, and the transaction involving the one or more associated supervision nodes; and
decrypting the piece of second transaction-supervision ciphertext based on a supervision private key, to obtain and supervise the reporting information.

20. A transaction supervision system based on a blockchain, comprising:

a payer client node;
a blockchain verification node; and
one or more associated supervision nodes, wherein
the payer client node is configured to:

obtain transaction plaintext of a transaction, wherein the transaction plaintext comprises payee identity information, a transaction amount, and payer identity information;
receive an encrypted payee address and a first amount encryption parameter sent by a payee client node;
generate a random symmetric key, and construct first transaction ciphertext based on the random symmetric key, wherein the first transaction ciphertext comprises an encrypted payer address, an encrypted payment amount, the encrypted payee address, and first transaction-supervision ciphertext, wherein

the first transaction-supervision ciphertext comprises encrypted supervision information and one or more encrypted symmetric keys, the encrypted supervision information being obtained by encrypting the transaction plaintext based on the random symmetric key, and the one or more encrypted symmetric keys comprising: one or more keys obtained by encrypting the random symmetric key respectively based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount; and

send the first transaction ciphertext and a zero-knowledge proof to the blockchain, wherein the zero-knowledge proof is a proof for verifying whether the first transaction-ciphertext is correct and complete;

the blockchain verification node is configured to:

store the first transaction-ciphertext onto the blockchain in a case that the zero-knowledge proof is valid, and update a current account balance at the encrypted payer address and a current account balance at the encrypted payee address based on the first transaction-ciphertext; and

each of the one or more associated supervision nodes are configured to:

obtain the first transaction ciphertext from the blockchain, perform decryption based on a supervision private key to obtain the random symmetric key, and perform decryption based on the random symmetric key to obtain the transaction plaintext for supervision and verification.

21. A transaction supervision apparatus based on a blockchain, applied to a payer client node, comprising:

an obtaining unit;
a receiving unit;
a processing unit; and
a sending unit, wherein
the obtaining unit is configured to obtain transaction plaintext of a transaction, wherein the transaction plaintext comprises payee identity information, a transaction amount, and payer identity information;
the receiving unit is configured to receive an encrypted payee address and a first amount encryption parameter sent by a payee client node;
the processing unit is configured to generate a random symmetric key, and construct first transaction ciphertext based on the random symmetric key, wherein the first transaction ciphertext comprises an encrypted payer address, an encrypted payment amount, the encrypted payee address, and first transaction supervision-ciphertext, wherein

the first transaction-supervision ciphertext comprises encrypted supervision information and one or more encrypted symmetric keys, the encrypted supervision information being obtained by encrypting the transaction plaintext based on the random symmetric key, and the one or more encrypted symmetric keys comprising: one or more keys obtained by respectively encrypting the random symmetric key respectively based on one or more supervision public keys respectively corresponding to one or more associated supervision nodes involved in the transaction, and

the encrypted payment amount is obtained by encrypting the transaction amount based on the first amount encryption parameter and a second amount encryption parameter, the second amount encryption parameter being a parameter used by the payer client node to encrypt the transaction amount; and

the sending unit is configured to send the first transaction ciphertext and a zero-knowledge proof to the blockchain, wherein the zero-knowledge proof is a proof for verifying whether the first transaction-ciphertext is correct and complete.

22. A transaction supervision apparatus based on a blockchain, applied to each of one or more associated supervision nodes, comprising:

an obtaining unit;
a decrypting unit; and
a supervising unit, wherein
the obtaining unit is configured to obtain first transaction ciphertext from the blockchain;

the decrypting unit is configured to perform decryption based on a supervision private key to obtain a random symmetric key; and

the supervising unit is configured to perform decryption based on the random symmetric key to obtain transaction plaintext for supervision and verification, wherein

the first transaction ciphertext comprises an encrypted payer address, an encrypted payment amount, an encrypted payee address, and first transaction supervision-ciphertext, wherein

the first transaction-supervision ciphertext comprises encrypted supervision information and one or more encrypted symmetric keys, the encrypted supervision information being obtained by encrypting the transaction plaintext based on the random symmetric key, and the one or more encrypted symmetric keys comprising: one or more keys obtained by encrypting the random symmetric key based on one or more supervision public keys respectively corresponding to the one or more associated supervision nodes involved in a transaction, and

the encrypted payment amount is obtained by encrypting a transaction amount based on a first amount encryption parameter and a second amount encryption parameter, the first amount encryption parameter being a parameter used by a payee client node to encrypt the transaction amount, and the second amount encryption parameter being a parameter used by a payer client node to encrypt the transaction amount; and

the transaction plaintext comprises payee identity information, the transaction amount, and payer identity information.

23. A transaction supervision system based on a blockchain, comprising:

a payer client node;
a blockchain verification node; and
associated supervision nodes, wherein
the payer client node is configured to:

obtain transaction plaintext of a transaction, and constructing second transaction ciphertext based on the transaction plaintext, wherein the transaction involves one or more associated supervision nodes;
generate reporting information based on a know your customer (KYC) contract and the second transaction ciphertext, and encrypt the reporting information respectively based on one or more supervision public keys respectively corresponding to the one or more associated supervision nodes in the KYC contract, to obtain one or more pieces of second transaction-supervision ciphertext; and
send the second transaction ciphertext, the one or more pieces of second transaction-supervision ciphertext, and a zero-knowledge proof to the blockchain, wherein the zero-knowledge proof is a proof for verifying whether the reporting information is correct and complete;

the blockchain verification node is configured to:
store the second transaction ciphertext and the one or more pieces of second transaction-supervision ciphertext onto the blockchain in a case that the zero-knowledge proof is valid based on the second transaction ciphertext, the KYC contract, and the one or more pieces of second transaction-supervision ciphertext; and
each of the one or more associated supervision nodes is configured to:
obtain a corresponding pieces of second transaction-supervision ciphertext from the blockchain, and decrypt the corresponding pieces of second transaction-supervision ciphertext based on a supervision private key, to obtain and supervise the reporting information.

24. A transaction supervision apparatus based on a blockchain, applied to a payer client node, comprising:

a constructing unit;
an obtaining unit; and
a sending unit, wherein
the constructing unit is configured to obtain transaction plaintext of a transaction, and construct second transaction ciphertext based on the transaction plaintext, wherein the transaction involves one or more associated supervision nodes;
the obtaining unit is configured to generate reporting information based on a know your customer (KYC) contract and the second transaction ciphertext, and encrypt the reporting information respectively based on one or more supervision public keys respectively corresponding to the one or more associated supervision nodes in the KYC contract, to obtain one or more pieces of second transaction-supervision ciphertext; and

the sending unit is configured to send the second transaction ciphertext, the one or more pieces of second transaction-supervision ciphertext, and a zero-knowledge proof to the blockchain, wherein the zero-knowledge proof is a proof for verifying whether the reporting information is correct and complete, such that each of the one or more pieces of second transaction-supervision ciphertext is decrypted and supervised by a corresponding associated supervision node in a case that the zero-knowledge proof is valid.

25. A transaction supervision apparatus based on a blockchain, applied to each of one or more associated supervision nodes, comprising:

an obtaining unit; and
a processing unit, wherein
the obtaining unit is configured to obtain, by each of the one or more associated supervision nodes, a piece of second transaction-supervision ciphertext of one or more pieces of second transaction-supervision ciphertext from the blockchain, wherein
the one or more pieces of second transaction-supervision ciphertext are obtained by a payer client node through encrypting reporting information respectively based on one or more supervision public keys respectively corresponding to the one or more associated supervision nodes in a know your customer (KYC) contract, the reporting information being generated based on the KYC contract and second transaction ciphertext, the second transaction ciphertext being constructed based on transaction plaintext of a transaction, and the transaction involving the one or more associated supervision nodes; and
the processing unit is configured to decrypt the piece of second transaction-supervision ciphertext based on a supervision private key, to obtain and supervise the reporting information.

26. An electronic device, comprising:

a processor; and
a memory, wherein
the memory is configured to store an executable instruction of the processor; and
the processor is configured to execute the instruction to perform the transaction supervision method based on a blockchain according to any one of claims 8, 9, 18, or 19.

27. A computer-readable storage medium, wherein an instruction in the computer-readable storage medium is executed by a processor to perform the transaction supervision method based on a blockchain according to any one of claims 8, 9, 18, or 19.

**FIG. 1**

201

a payer client node obtains transaction plaintext of a transaction

202

the payer client node receives an encrypted payee address and a first amount encryption parameter sent by a payee client node

203

the payer client node generates a random symmetric key, and constructs the first transaction ciphertext based on the random symmetric key

204

the payer client node sends the first transaction ciphertext and a zero-knowledge proof to a blockchain

205

the blockchain verification node stores the first transaction ciphertext onto the blockchain in a case that the zero-knowledge proof is valid, and updates a current account balance at the encrypted payer address and a current account balance at the encrypted payee address based on the first transaction ciphertext

206

each of one or more associated supervision nodes obtains the first transaction ciphertext from the blockchain, performs decryption based on a supervision private key to obtain the random symmetric key, and performs decryption based on the random symmetric key to obtain the transaction plaintext for supervision and verification

**FIG. 2**

transaction plaintext → random symmetric key → encrypted supervision information

random symmetric key → one or more supervision public keys → one or more encrypted symmetric keys

first transaction-supervision ciphertext

encrypted payer address

encrypted payment amount

encrypted payee address

first transaction ciphertext

**FIG. 3**

| supervision bureau C | supervision bureau D | supervision bureau E | KYC contract | payer client node A | payee client node B |

Send a supervision public key of C

Send a supervision public key of B

Send a supervision public key of D

Send a supervision public key of A

Send a supervision public key of E

Request a payee address

Send a payee address

Send encrypted identity data

| supervision bureau C | supervision bureau D | supervision bureau E | KYC contract | payer client node A | payee client node B |

**FIG. 4**

**FIG. 5**

a payer client node obtains transaction plaintext of a transaction, and constructs second transaction ciphertext based on the transaction plaintext — 301

the payer client node generates reporting information based on a know your customer (KYC) contract and the second transaction ciphertext, and encrypts the reporting information respectively based on one or more supervision public keys respectively corresponding to the one or more associated supervision nodes in the KYC contract to obtain one or more second transaction-supervision ciphertext — 302

the payer client node sends the second transaction ciphertext, the one or more pieces of second transaction-supervision ciphertext, and a zero-knowledge proof to a blockchain — 303

a blockchain verification node stores the second transaction ciphertext and the one or more pieces of second transaction-supervision ciphertext onto the blockchain in a case that the zero-knowledge proof is valid based on the second transaction ciphertext, the KYC contract, and the one or more pieces of second transaction-supervision ciphertext — 304

each of the one or more associated supervision nodes obtains the one or more pieces of second transaction-supervision ciphertext from the blockchain, and decrypts the one or more second pieces of transaction-supervision ciphertext based on a supervision private key to obtain and supervise the reporting information — 305

**FIG. 6**

the payer client node signs the encrypted payer address based on a payer private key to obtain a signed payer address

401

the payer client node obtains a signed payee address corresponding to the encrypted payee address, where the signed payee address is obtained by signing the encrypted payee address based on a payee private key

402

the payer client node merges payer location information, payee location information, digital-currency contract-address location information, the signed payer address, the signed payee address, a first amount encryption parameter, and the transaction amount to generate the reporting information

403

**FIG. 7**

the payer client node signs the encrypted payer address based on a payer private key to obtain a signed payer address

401

the payer client node obtains a signed payee address corresponding to the encrypted payee address, where the signed payee address is obtained by signing the encrypted payee address based on a payee private key

402

the payer client node merges payer location information, payee location information, digital-currency contract-address location information, the signed payer address, the signed payee address, a first amount encryption parameter, and the transaction amount to generate the reporting information

403

the payer client node encrypts the reporting information respectively based on a first supervision public key, a second supervision public key and a third supervision public key to obtain the one or more pieces of second transaction-supervision ciphertext

501

**FIG. 8**

Stores x units of digital currency T at address₁

A

100 units of digital currency T

B

Associated supervision node

Constructs second transaction ciphertext

Obtains one or more second transaction ciphertext

Decrypts one piece of second transaction- supervision ciphertext based on a supervision private key to obtain and supervise the reporting information

After the blockchain verification node verifies the transaction, the transaction is continued; and the second transaction ciphertext and one or more pieces of signed second transaction ciphertext involved in the transaction are stored on the blockchain

Blockchain network

**FIG. 9**

transaction supervision system 60 based on a blockchain

payer client node — 61

blockchain verification node — 62

associated supervision nodes — 63

**FIG. 10**

transaction supervision apparatus 70
based on a blockchain

71

obtaining unit

72

receiving unit

73

processing unit

74

sending unit

**FIG. 11**

transaction supervision apparatus 80
based on a blockchain

81

obtaining unit

82

decrypting unit

83

supervising unit

**FIG. 12**

transaction supervision system 90 based on a blockchain

payer client node — 901

blockchain verification node — 902

associated supervision nodes — 903

**FIG. 13**

transaction supervision apparatus 100 based on a blockchain

constructing unit — 1001

obtaining unit — 1002

sending unit — 1003

**FIG. 14**

transaction supervision apparatus 200 based on a blockchain

obtaining unit — 1101

processing unit — 1102

**FIG. 15**

**FIG. 16**

## INTERNATIONAL SEARCH REPORT

| International application No. |
| --- |
| **PCT/CN2023/138883** |

| A. | CLASSIFICATION OF SUBJECT MATTER |
| --- | --- |

G06Q40/04(2012.01)i; G06F21/64(2013.01)i; G06F21/62(2013.01)i; G06Q20/38(2012.01)i

According to International Patent Classification (IPC) or to both national classification and IPC

| B. | FIELDS SEARCHED |
| --- | --- |

Minimum documentation searched (classification system followed by classification symbols)

G06Q40/-,G06F21/-,G06Q20/-

Documentation searched other than minimum documentation to the extent that such documents are included in the fields searched

Electronic data base consulted during the international search (name of data base and, where practicable, search terms used)

CNTXT, CNKI, CNABS, VEN, ENTXT: 监管, 交易监管, 零知识, 密钥, 区块链, 身份, 收款方, 存储介质, monitoring transaction, block chain, private key, transaction monitoring, supervisory verification, encrypted symmetric key?, zero knowledge,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113988863 A (ZHEJIANG UNIVERSITY et al.) 28 January 2022 (2022-01-28) description, paragraphs 0005-0006 and 0015 | 1-27 |
| PX | CN 116308776 A (DIGITAL CURRENCY INSTITUTE OF THE PEOPLE'S BANK OF CHINA) 23 June 2023 (2023-06-23) claims 1-14 | 1-9, 20-22, 26-27 |
| PX | CN 115953244 A (DIGITAL CURRENCY INSTITUTE OF THE PEOPLE'S BANK OF CHINA) 11 April 2023 (2023-04-11) claims 1-15 | 10-19, 23-27 |
| A | CN 108242013 A (CHINA MERCHANTS BANK CO., LTD.) 03 July 2018 (2018-07-03) entire description | 1-27 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **19 February 2024** | **27 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138883**

| Patent document cited in search report | | | Publication date (day/month/year) | Patent family member(s) | Publication date (day/month/year) |
|---|---|---|---|---|---|
| CN | 113988863 | A | 28 January 2022 | None | |
| CN | 116308776 | A | 23 June 2023 | None | |
| CN | 115953244 | A | 11 April 2023 | None | |
| CN | 108242013 | A | 03 July 2018 | None | |

Form PCT/ISA/210 (patent family annex) (July 2022)

**REFERENCES CITED IN THE DESCRIPTION**

**Patent documents cited in the description**

- CN 202211701471

- CN 202211702772